(19) Europäisches Patentamt
European Patent Office
Office européen des brevets

(11) **EP 3 896 266 B1**

(12) **EUROPEAN PATENT SPECIFICATION**

(45) Date of publication and mention
of the grant of the patent:
**25.03.2026 Bulletin 2026/13**

(21) Application number: **18943343.6**

(22) Date of filing: **11.12.2018**

(51) International Patent Classification (IPC):
*F01N 9/00* (2006.01)     *F01N 3/025* (2006.01)
*F01N 3/023* (2006.01)

(52) Cooperative Patent Classification (CPC):
**F01N 3/103; F01N 3/021; F01N 3/0231;**
**F01N 3/025; F01N 3/0253; F01N 3/2006;**
**F01N 9/002; F01N 9/005;** F01N 2900/08;
F01N 2900/1404; Y02A 50/20; Y02T 10/12;
Y02T 10/40

(86) International application number:
**PCT/CN2018/120218**

(87) International publication number:
**WO 2020/118506 (18.06.2020 Gazette 2020/25)**

(54) **CONTROL METHOD AND DEVICE FOR UPSTREAM TEMPERATURE OF DPF, AND VEHICLE**

VERFAHREN UND VORRICHTUNG ZUR REGELUNG DER UPSTREAM-TEMPERATUR VON DPF UND FAHRZEUG

PROCÉDÉ ET DISPOSITIF DE COMMANDE POUR TEMPÉRATURE EN AMONT DE FILTRE À PARTICULES DIESEL, ET VÉHICULE

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(43) Date of publication of application:
**20.10.2021 Bulletin 2021/42**

(73) Proprietor: Weichai Power Co., Ltd.
**Weifang, Shandong 261061 (CN)**

(72) Inventors:
• **XIE, Tongpeng**
**Weifang, Shandong 261061 (CN)**
• **YANG, Xinda**
**Weifang, Shandong 261061 (CN)**
• **CHU, Guoliang**
**Weifang, Shandong 261061 (CN)**
• **YAN, Libing**
**Weifang, Shandong 261061 (CN)**
• **TONG, Yuhua**
**Weifang, Shandong 261061 (CN)**

(74) Representative: **Epping - Hermann - Fischer**
**Patentanwaltsgesellschaft mbH**
**Schloßschmidstraße 5**
**80639 München (DE)**

(56) References cited:
EP-A2- 1 515 017     WO-A1-2007/138454
CN-A- 107 100 703    CN-A- 108 397 267
CN-A- 108 868 980    DE-A5- 112016 001 219
US-A1- 2013 108 511

**Description**

**FIELD**

The present disclosure relates to the technical field of vehicles, and in particular to a method and a device for controlling a temperature upstream of a DPF, and a vehicle.

**BACKGROUND**

With vehicle technology developing fast, exhaust treatment of engines, especially the exhaust treatment of diesel engines, is becoming increasing important for reducing the air pollution when vehicles are used.

An exhaust treatment system of a diesel engine includes a diesel oxidation catalyst (DOC), a hydrocarbon (HC) ejection device, a diesel particulate filter (DPF), a temperature sensor arranged upstream of the DPF and a temperature sensor arranged upstream of the DOC, etc. The DOC is configured to convert NO in exhaust gas into $NO_2$ and oxidize HC and CO in the exhaust gas. The DPF is configured to capture particles in the exhaust gas to reduce particles came out of the engine. The temperature sensor arranged upstream of the DPF is configured to acquire a temperature upstream of the DPF, that is, a temperature of the exhaust gas flowing into the DPF. The temperature sensor arranged upstream of the DOC is configured to acquire a temperature upstream of the DOC, that is, a temperature of the exhaust gas flowing into the DOC.

However, the particles that can be contained in the DPF are limited. Therefore, in order to ensure that the DPF captures particles normally, it is required to regenerate the DPF when the particles in the DPF accumulate to a certain amount. The DPF is regenerated as follows. When the temperature upstream of the DOC reaches a fuel ignition point, an electronic control unit (ECU) controls the HC ejection device arranged upstream of the DOC to eject fuel, so that the fuel is burned in the DOC so as to increase the temperature upstream of the DPF to a preset regeneration temperature. Therefore, the particles captured by the DPF are oxidized, so that the DPF regains the ability to capture particles. The preset regeneration temperature refers to a temperature required for regenerating the DPF.

In the process of regenerating the DPF, it is vital to control the temperature upstream of the DPF to reach the preset regeneration temperature. In the conventional technology, a method for controlling the temperature upstream of the DPF is as follows.

First, a basic feedforward fuel amount is acquired based on a mapping table between a current mass flow rate of the exhaust gas and the temperature upstream of the DOC. A feedforward fuel increment is acquired based on the preset regeneration temperature, the temperature upstream of the DOC, the mass flow rate of the exhaust gas, and exhaust heat capacity. A feedforward fuel amount is acquired by adding the basic feedforward fuel amount and the feedforward fuel increment. Then, a feedback fuel amount is acquired by utilizing a proportional-integral-differential (PID) algorithm based on the preset regeneration temperature and a temperature acquired by the temperature sensor arranged upstream of the DPF. Finally, a total fuel amount required to be ejected from the HC ejection device is acquired by adding the feedforward fuel amount and the feedback fuel amount, so that the electrical control unit controls the HC ejection device to eject fuel based on the total fuel amount. The temperature of the exhaust gas is increased by burning the fuel, so that the temperature upstream of the DPF is increased to the preset regeneration temperature.

However, in the method according to the conventional technology, the basic feedforward fuel amount is acquired by querying the mapping table, resulting in low accuracy of the basic feedforward fuel amount. Moreover, the feedforward fuel increment is acquired from a simple calculation, resulting in low accuracy of the feedforward fuel increment. Therefore, accuracy of the feedforward fuel amount determined based on the basic feedforward fuel amount and the feedforward fuel increment is low, resulting in low accuracy of the total fuel amount required to be ejected from the HC ejection device. If a total fuel amount ejected from the HC ejection device exceeds a fuel amount required for increasing the temperature upstream of the DPF to the preset regeneration temperature, the temperature upstream of the DPF may exceed the preset regeneration temperature. In this case, a device arranged downstream of the DPF may be burned out easily due to an excessive temperature. In addition, if a total fuel amount ejected from the HC ejection device is less than the fuel amount required for increasing the temperature upstream of the DPF to the preset regeneration temperature, the DPF may be regenerated incompletely, resulting in frequent regeneration. The frequent regeneration may not only increase fuel consumption, but also reduce a service life of the DPF.

Document US 2013/108511 A1 discloses an exhaust gas purification system, which includes a feedforward controller, a feedback controller outputting a correcting variable for achieving a target temperature of DPF, and a variable adding unit that adds the correcting variable output from the feedback controller to a basic variable output from the feedforward controller to compute a manipulated variable.

Document EP 1515017 A2 discloses a dynamic catalyst bed temperature Td being computed by taking the thermal capacity of an exhaust system into consideration. Therefore, even when the operating condition of an engine is in transition, it is possible to obtain a bed temperature that corresponds to an actual catalyst bed temperature at an exhaust purifying catalyst in a state where no addition of fuel is being performed.

Document WO 2007/138454 A1 discloses an exhaust purification device of an internal combustion engine, which estimates a catalyst bed temperature from a detected value of the exhaust gas temperature, and calculates a switch amount of air that is used for determining whether or not the amount of addition of unburned fuel fraction needs to be corrected. Then, the device determines whether or not the actual amount of intake air detected is greater than the switch amount of air. If the actual amount of air exceeds the switch amount of air, it can be determined that the operation state of the engine is a state in which white smoke is likely to be produced, and therefore a correction of lessening the amount of addition of fuel provided from a fuel addition injector is performed.

## SUMMARY

To solve the above technical problems in the conventional technology, a method and a device for controlling a temperature upstream of a DPF, and a vehicle are provided according to embodiments of the present disclosure. Accuracy of the total fuel amount is improved by improving accuracy of the feedforward fuel amount, so that a case that a temperature upstream of the DPF acquired by control exceeds or is less than a preset regeneration temperature is avoided, thereby preventing a device arranged downstream of the DPF from being burned out due to excessive temperature or avoiding frequent regeneration due to insufficient temperature.

To realize the above objectives, the following technical solutions are provided according to the present disclosure.

A method for controlling a temperature upstream of a DPF is provided according to the present disclosure. the method includes: acquiring, by utilizing a physical model, a feedforward fuel amount based on a preset regeneration temperature, a current temperature upstream of the diesel particulate filter DPF and a current temperature upstream of a diesel oxidation catalyst DOC, where the physical model is constructed by simulating a process in which the DOC increases the temperature upstream of the DPF to the preset regeneration temperature; acquiring a total fuel amount based on the feedforward fuel amount and a feedback fuel amount; and transmitting the total fuel amount to a hydrocarbon ejection device, where the hydrocarbon ejection device ejects fuel based on the total fuel amount, to increase the temperature upstream of the DPF to the preset regeneration temperature; and wherein the constructing the physical model by simulating the process in which the DOC increases the temperature upstream of the DPF to the preset regeneration temperature includes: dividing the DOC into at least two DOC sub-blocks, where the at least two DOC sub-blocks include a first DOC sub-block and a second DOC sub-block; setting a current temperature upstream of the DPF as an initial temperature downstream of the second DOC sub-block; acquiring an initial temperature downstream of the first DOC sub-block based on the initial temperature downstream of the second DOC sub-block; setting a current temperature upstream of the DOC as a temperature upstream of the first DOC sub-block; acquiring a fuel demand amount of the first DOC sub-block based on the temperature upstream of the first DOC sub-block and the initial temperature downstream of the first DOC sub-block; acquiring an actual temperature downstream of the first DOC sub-block based on the temperature upstream of the first DOC sub-block and the fuel demand amount of the first DOC sub-block; setting the actual temperature downstream of the first DOC sub-block as a temperature upstream of the second DOC sub-block; acquiring a fuel demand amount of the second DOC sub-block based on the temperature upstream of the second DOC sub-block and the initial temperature downstream of the second DOC sub-block; acquiring an actual temperature downstream of the second DOC sub-block based on the temperature upstream of the second DOC sub-block and the fuel demand amount of the second DOC sub-block; and acquiring the feedforward fuel amount based on the fuel demand amount of the first DOC sub-block and the fuel demand amount of the second DOC sub-block.

Optionally, before the acquiring a total fuel amount based on the feedforward fuel amount and a feedback fuel amount, the method further includes: acquiring the feedback fuel amount based on a difference between the actual temperature downstream of the second DOC sub-block and the current temperature upstream of the DPF by utilizing a proportional-integral-differential PID algorithm.

Optionally, the acquiring the feedforward fuel amount based on the fuel demand amount of the first DOC sub-block and the fuel demand amount of the second DOC sub-block includes: acquiring the feedforward fuel amount based on the fuel demand amount of the first DOC sub-block, a first fuel conversion rate corresponding to the fuel demand amount of the first DOC sub-block, the fuel demand amount of the second DOC sub-block and a second fuel conversion rate corresponding to the fuel demand amount of the second DOC sub-block.

Optionally, the acquiring, by utilizing a physical model, a feedforward fuel amount includes: acquiring the feedforward fuel amount periodically by utilizing the physical model, where a preset regeneration temperature corresponding to a previous period is increased by a fixed temperature or a non-fixed temperature to obtain a preset regeneration temperature corresponding to a subsequent period, and the preset regeneration temperature ranges from the current temperature upstream of the DPF to a target regeneration temperature.

A device for controlling a temperature upstream of a DPF is further provided according to the present disclosure. The device includes a first acquiring unit, a second acquiring unit and a transmitting unit. The first acquiring unit is configured to acquire, by utilizing a physical model, a feedforward fuel amount based on a preset regeneration temperature, a current temperature upstream of a diesel particulate filter DPF and a current temperature upstream of a diesel oxidation catalyst DOC. The physical model is constructed by simulating a process in which the DOC increases the temperature upstream of the DPF to the preset regeneration temperature. The second acquiring unit is configured to acquire a total fuel amount based on the feedforward fuel amount and a feedback fuel amount. The transmitting unit is configured to transmit the total fuel amount to a hydrocarbon ejection device, where the hydrocarbon ejection device ejects fuel based on the total fuel amount, to increase the temperature upstream of the DPF to the preset regeneration temperature; and wherein the dividing subunit is configured to divide the DOC into at least two DOC sub-blocks. The at least two DOC sub-blocks include a first DOC sub-block and a second DOC sub-block. The first setting subunit is configured to set a current temperature upstream of the DPF as an initial temperature downstream of the second DOC sub-block. The first acquiring subunit is configured to acquire an initial temperature downstream of the first DOC sub-block based on the initial temperature downstream of the second DOC sub-block. The second setting subunit is configured to set a current temperature upstream of the DOC as a temperature upstream of the first DOC sub-block. The second acquiring subunit is configured to acquire a fuel demand amount of the first DOC sub-block based on the temperature upstream of the first DOC sub-block and the initial temperature downstream of the first DOC sub-block. The third acquiring subunit is configured to acquire an actual temperature downstream of the first DOC sub-block based on the temperature upstream of the first DOC sub-block and the fuel demand amount of the first DOC sub-block. The third setting subunit is configured to set the actual temperature downstream of the first DOC sub-block as a temperature upstream of the second DOC sub-block. The fourth acquiring subunit is configured to acquire a fuel demand amount of the second DOC sub-block based on the temperature upstream of the second DOC sub-block and the initial temperature downstream of the second DOC sub-block. The fifth acquiring subunit is configured to acquire an actual temperature downstream of the second DOC sub-block based on the temperature upstream of the second DOC sub-block and the fuel demand amount of the second DOC sub-block. The sixth acquiring subunit is configured to acquire the feedforward fuel amount based on the fuel demand amount of the first DOC sub-block and the fuel demand amount of the second DOC sub-block.

Optionally, the first acquiring unit includes a dividing subunit, a first setting subunit, a first acquiring subunit, a second setting subunit, a second acquiring subunit, a third acquiring subunit, a third setting subunit, a fourth acquiring subunit, a fifth acquiring subunit, and a sixth acquiring subunit.

Optionally, the device further includes a third acquiring unit. The third acquiring unit is configured to acquire the feedback fuel amount based on a difference between the actual temperature downstream of the second DOC sub-block and the current temperature upstream of the DPF by utilizing a proportional-integral-differential PID algorithm.

Optionally, the sixth acquiring subunit is configured to acquire the feedforward fuel amount based on the fuel demand amount of the first DOC sub-block, a first fuel conversion rate corresponding to the fuel demand amount of the first DOC sub-block, the fuel demand amount of the second DOC sub-block and a second fuel conversion rate corresponding to the fuel demand amount of the second DOC sub-block.

Optionally, the first acquiring unit is configured to acquire the feedforward fuel amount periodically by utilizing the physical model. A preset regeneration temperature corresponding to a previous period is increased by a fixed temperature or a non-fixed temperature to obtain a preset regeneration temperature corresponding to a subsequent period. The preset regeneration temperature ranges from the current temperature upstream of the DPF to the target regeneration temperature.

A vehicle is further provided according to the present disclosure. The vehicle includes the above device for controlling a temperature upstream of a DPF.

Compared with the conventional technology, the present disclosure has at least the following advantages. In the method for controlling a temperature upstream of a DPF according to the embodiment of the present disclosure, the preset regeneration temperature, the current temperature upstream of the DPF and the current temperature upstream of the DOC are inputted into the physical model, so as to acquire the feedforward fuel amount from the physical model. Further, in the process of acquiring the feedforward fuel amount from the physical model, a combustion process of increasing the temperature upstream of the DPF to the preset regeneration temperature is simulated in the DOC, so that the feedforward fuel amount is acquired based on a fuel amount required for the combustion process. Therefore, in this method, the physical model accurately simulates the combustion process of increasing the temperature upstream of the DPF to the preset regeneration temperature based on the current temperature upstream of the DPF and the current temperature upstream of the DOC. The feedforward fuel amount is acquired accurately based on the simulated combustion process, so that the accuracy of the feedforward fuel amount is improved, thereby improving the accuracy of the total fuel amount required to be ejected by the HC ejection device. Therefore, the temperature upstream of the DPF acquired by control is prevented form exceeding or being less than the preset regeneration temperature, thereby preventing a device arranged downstream of the DPF from being burned out due to excessive temperature or avoiding frequent regeneration due to insufficient temperature.

## BRIEF DESCRIPTION OF THE DRAWINGS

For clearer illustration of the technical solutions according to embodiments of the present disclosure or the conventional technology, hereinafter briefly described are the drawings to be applied in the embodiments of the present disclosure or the conventional technology. Apparently, the drawings in the following descriptions show only some embodiments of the present disclosure, and other drawings may be acquired by those skilled in the art based on the provided drawings without creative efforts.

Figure 1 is a schematic structural diagram of an exhaust gas treatment device of a diesel engine;

Figure 2 is a flow chart of a method for controlling a temperature upstream of a DPF;

Figure 3 is a flow chart of an implementation of a method for controlling a temperature upstream of a DPF according to an embodiment of the present disclosure;

Figure 4 is a flow chart of another implementation of a method for controlling a temperature upstream of a DPF according to an embodiment of the present disclosure;

Figure 5 is a flow chart of an implementation of a step S401 according to an embodiment of the present disclosure;

Figure 6 is a schematic structural diagram of dividing a DOC into six DOC sub-blocks according to an embodiment of the present disclosure;

Figure 7 is a flow chart of an implementation of a step S4013 according to an embodiment of the present disclosure;

Figure 8 is a flow chart of an implementation of a step S4015 according to an embodiment of the present disclosure;

Figure 9 is a flow chart of an implementation of a step S401 in a case of N=2 according to an embodiment of the present disclosure;

Figure 10 is a flow chart of a method for controlling a temperature upstream of a DPF according to another embodiment of the present disclosure;

Figure 11 is a structural schematic diagram of a device for controlling a temperature upstream of a DPF according to an embodiment of the present disclosure, and

Figure 12 is a structural schematic diagram of a vehicle according to an embodiment of the present disclosure.

## DETAILED DESCRIPTION OF EMBODIMENTS

In order to reduce air pollution caused by exhaust gas came out of a vehicle, the exhaust gas emitted from an engine is required to be treated. The exhaust gas is treated as follows. NO in the exhaust gas is converted into $NO_2$, HC and CO in the exhaust gas are oxidized, particles in the exhaust gas are captured, and so on.

For convenience of explanation and description, treatment of the exhaust gas emitted from a diesel engine is described as an example for explanation.

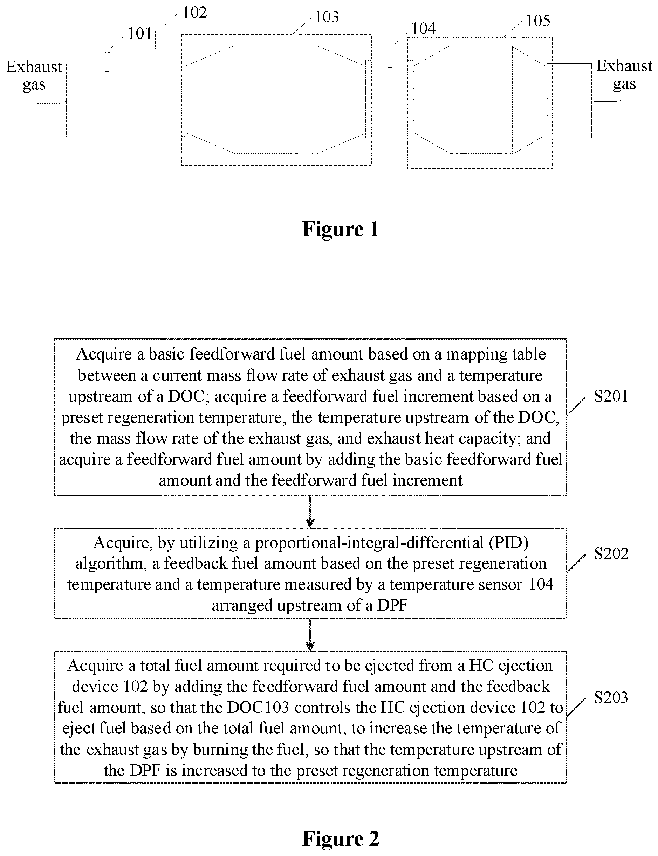

Reference is made to Figure 1, which is a schematic structural diagram of an exhaust gas treatment device of a diesel engine.

As shown in Figure 1, the exhaust gas treatment device of the diesel engine includes a DOC 103, a temperature sensor 101 arranged upstream of the DOC 103, an HC ejection device 102, a DPF105 and a temperature sensor 104 arranged upstream of the DPF105.

The temperature sensor 101 arranged upstream of the DOC 103 is configured to acquire a temperature upstream of the DOC 103, that is, a temperature of the exhaust gas flowing into the DOC 103.

The HC ejection device 102 is configured to eject fuel to burn the fuel in the DOC 103 so as to increase the temperature of the exhaust gas.

The DOC 103 is configured to convert NO in the exhaust gas into $NO_2$ and oxidize HC and CO in the exhaust gas. When the DPF 105 is required to be regenerated, the DOC 103 is further configured to burn the fuel ejected by the HC ejection device 102, so that the temperature upstream of the DPF reaches a temperature required for regenerating the DPF 105.

The temperature sensor 104 arranged upstream of the DPF105 is configured to acquire a temperature upstream of the DPF 105, that is, a temperature of the exhaust gas flowing into the DPF 105.

The DPF105 is configured to capture particles in the exhaust gas so as to reduce particles came out of the engine. In regeneration of the DPF 105, the DPF 105 is further configured to oxidize particles that have been captured in the DPF 105, so that the DPF 105 regains ability to capture particles.

The above exhaust gas treatment device treats the exhaust gas as follows. First, the exhaust gas passes through the DOC 103, so that the DOC 103 converts the NO in the exhaust gas into $NO_2$, reducing air pollution caused by NO. Further, the DOC 103 oxidizes HC and CO in the exhaust gas to $CO_2$ and $H_2O$, reducing air pollution caused by HC and CO. Then, the exhaust gas passes through the DPF 105 so that the DPF 105 captures particles in the exhaust gas, reducing air pollution caused by particles.

However, the particles that can be contained in the DPF 105 are limited. Therefore, in order to ensure that the DPF 105 captures particles normally, it is required to regenerate the DPF 105 when the particles in the DPF 105 accumulate to a certain amount.

The DPF 105 is regenerated as follows. The DOC 103 controls the HC ejection device 102 arranged upstream of the DOC 103 to eject fuel so that the fuel is burned in the DOC 103, so as to increase the temperature upstream of the DPF to a preset regeneration temperature, thereby oxidizing the particles that have been captured in the DPF 105. In this way, the DPF105 regains the ability to capture particles.

Therefore, in the regeneration of the DPF105, it is vital to control the temperature upstream of the DPF to reach the preset regeneration temperature.

An existing method for controlling a temperature upstream of the DPF is described below.

Reference is made to Figure 2, which is a flow chart of a method for controlling a temperature upstream of a DPF.

In the conventional technology, the method for controlling the temperature upstream of the DPF includes the following steps S201 to S203.

In S201, a basic feedforward fuel amount is acquired based on a mapping table between a current mass flow rate of the exhaust gas and the temperature upstream of the DOC. A feedforward fuel increment is acquired based on the preset regeneration temperature, the temperature upstream of the DOC, the mass flow rate of the exhaust gas, and exhaust heat capacity. A feedforward fuel amount is acquired by adding the basic feedforward fuel amount and the feedforward fuel increment.

The feedforward fuel increment is calculated form the following equation.

$$q = \frac{CpEG \times mEG \times (t_{TG} - t_{docup})}{facFu} \qquad (0)$$

In the equation (0), q represents a feedforward fuel increment, facFu represents a fuel calorific value, CpEG represents exhaust heat capacity, mEG represents a mass flow rate of the exhaust gas, $t_{TG}$ represents the preset regeneration temperature, and $t_{ocup}$ represents a temperature upstream of DOC.

In S202, a feedback fuel amount is acquired by utilizing a proportional-integral-differential (PID) algorithm based on the preset regeneration temperature and a temperature acquired by the temperature sensor 104 arranged upstream of the DPF.

In S203, a total fuel amount required to be ejected from the HC ejection device 102 is acquired by adding the feedforward fuel amount and the feedback fuel amount, so that the electrical control unit controls the HC ejection device 102 to eject fuel based on the total fuel amount. The temperature of the exhaust gas is increased by burning the fuel, so that the temperature upstream of the DPF is increased to the preset regeneration temperature.

However, it is found from research that the existing method for controlling a temperature upstream of a DPF has the following disadvantages.

In the existing method, since the basic feedforward fuel amount is acquired by querying the mapping table, the accuracy of the basic feedforward fuel amount is low. Moreover, the feedforward fuel increment is acquired from a simple calculation, thereby resulting in low accuracy of the feedforward fuel increment. Therefore, accuracy of the feedforward fuel amount determined based on the basic feedforward fuel amount and the feedforward fuel increment is low, resulting in low accuracy of the total fuel amount required to be ejected from the HC ejection device. If a total fuel amount ejected from the HC ejection device exceeds a fuel amount required for increasing the temperature upstream of the DPF to the preset regeneration temperature, the temperature upstream of the DPF may exceed the preset regeneration temperature. In this case, a device arranged downstream of the DPF may be burned out easily due to an excessive temperature. In addition, if a total fuel amount ejected from the HC ejection device is less than the fuel amount required for increasing the temperature upstream of the DPF to the preset regeneration temperature, the DPF may be regenerated incompletely, resulting in frequent regeneration. The frequent regeneration may not only increase fuel consumption, but also reduce a service life of the DPF.

In order to overcome the disadvantages in the above existing method for controlling a temperature upstream of a DPF, a method for controlling a temperature upstream of a DPF is provided according to an embodiment of the present disclosure. The method according to the embodiment of the present disclosure includes: acquiring, by utilizing a physical model, a feedforward fuel amount based on the preset regeneration temperature, a current temperature upstream of the diesel particulate filter DPF and a current temperature upstream of the diesel oxidation catalyst DOC, where the physical model is constructed by simulating a process in which the DOC increases the temperature upstream of the DPF to the preset regeneration temperature; acquiring a total fuel amount based on the feedforward fuel amount and a feedback fuel amount; and transmitting the total fuel amount to the hydrocarbon ejection device, so that the hydrocarbon ejection device ejects fuel based on the total fuel amount, so as to increase the temperature upstream of the DPF to the preset regeneration temperature.

In the method according to the embodiment of the present disclosure, the preset regeneration temperature, the current temperature upstream of the DPF and the current temperature upstream of the DOC are inputted into the physical model, so as to acquire the feedforward fuel amount from the physical model. Further, in the process of acquiring the feedforward fuel amount from the physical model, a combustion process of increasing the temperature upstream of the DPF to the preset regeneration temperature is simulated in the DOC, so that the feedforward fuel amount is acquired based on a fuel amount required for the combustion process. In this method, the physical model accurately simulates the combustion process of increasing the temperature upstream of the DPF to the preset regeneration temperature based on the current temperature upstream of the DPF and the current temperature upstream of the DOC. Therefore, the feedforward fuel amount is acquired accurately based on the simulated combustion process, so that the accuracy of the feedforward fuel amount is improved, thereby improving the accuracy of the total fuel amount required to be ejected by the HC ejection device. Therefore, the temperature upstream of the DPF acquired by control is prevented form exceeding or being less than the preset regeneration temperature, thereby preventing a device arranged downstream of the DPF from being burned out due to excessive temperature or avoiding frequent regeneration due to insufficient temperature.

Technical solutions in the embodiments of the present disclosure are described clearly and completely in conjunction with the accompanying drawings in the embodiments of the present disclosure, so that those skilled in the art can better understand the technical solutions of the present disclosure. It is apparent that described embodiments are only a part of rather than all the embodiments of the present disclosure. Based on the embodiments of the present disclosure, all other embodiments acquired by these skilled in the art without creative work fall within the protection scope of the present disclosure.

First Method Embodiment

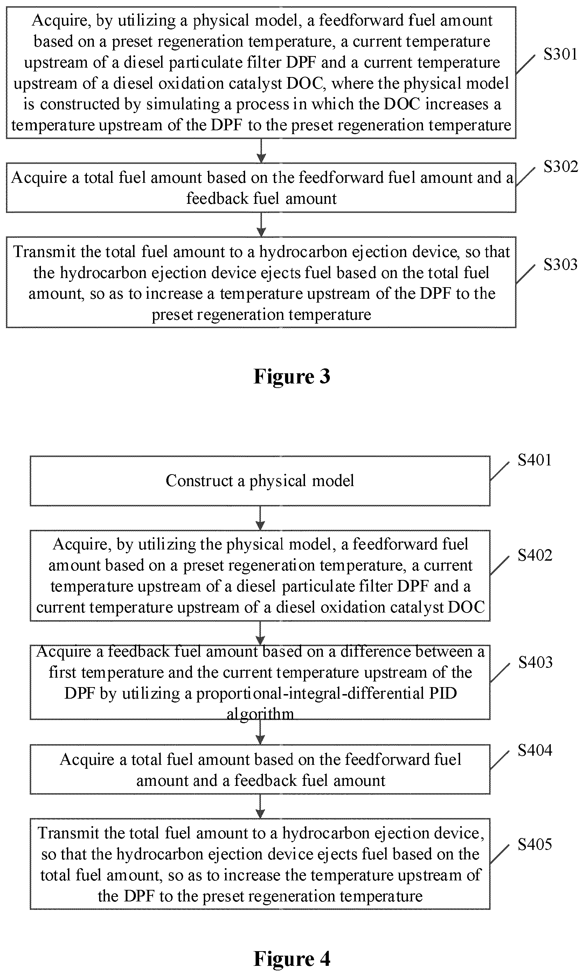

Reference is made to Figure 3, which is a flow chart of an implementation of a method for controlling a temperature upstream of a DPF according to an embodiment of the present disclosure.

The method for controlling a temperature upstream of a DPF according to the embodiment of the present disclosure includes the following steps S301 to S303.

In S301, by utilizing a physical model, a feedforward fuel amount is acquired based on the preset regeneration temperature, a current temperature upstream of the diesel particulate filter DPF and a current temperature upstream of the diesel oxidation catalyst DOC. The physical model is constructed by simulating a process in which the DOC increases the temperature upstream of the DPF to the preset regeneration temperature.

The preset regeneration temperature may be set in advance. For example, the preset regeneration temperature is set based on the temperature required for regenerating the DPF.

The current temperature upstream of the DPF may be acquired by a temperature sensor arranged upstream of the DPF.

The current temperature upstream of the DOC may be acquired by a temperature sensor arranged upstream of the DOC.

In an implementation, the physical model simulates the combustion process in which the DOC increases the temperature upstream of the DPF to the preset regeneration temperature as follows. First, the physical model simulates a current state of the DOC based on the current temperature upstream of the DOC and the current temperature upstream of the DPF. Then, the physical model simulates, based on the preset regeneration temperature and the current state of the DOC, the combustion process in which the DOC increases the temperature upstream of the DPF to the preset regeneration temperature.

In this way, when the preset regeneration temperature, the current temperature upstream of the DOC, and the current temperature upstream of the DPF are inputted into the physical model, the physical model accurately simulates the DOC and accurately simulate the combustion process in which the DOC increases the temperature upstream of the DPF to the preset regeneration temperature, so as to accurately acquire the feedforward fuel amount based on the fuel amount required for the combustion process. Therefore, in the present disclosure, in S301, the combustion process of increasing the temperature upstream of the DPF to the preset regeneration temperature is accurately simulated based on the current temperature upstream of the DPF and the current temperature upstream of the DOC, so that the feedforward fuel amount is acquired accurately based on the simulated combustion process, thereby improving the accuracy of the feedforward fuel amount.

In S302, a total fuel amount is acquired based on the feedforward fuel amount and a feedback fuel amount.

The feedback fuel amount is acquired by utilizing the PID algorithm. Specifically, the feedback fuel amount is acquired based on a difference between the preset regeneration temperature and the temperature upstream of the current DPF by utilizing the PID algorithm.

In an implementation, in S302, the total fuel amount is acquired based on a sum of the feedforward fuel amount and the feedback fuel amount.

In another implementation, in order to further improve the accuracy of the total fuel amount, in S302, the total fuel amount is acquired based on the feedforward fuel amount, the feedback fuel amount, a first weight and a second weight.

The first weight may be preset. For example, the first weight is preset based on a proportion of influence of the feedforward fuel amount on the total fuel amount.

The second weight may be preset. For example, the second weight is preset based on a proportion of influence of the feedback fuel amount on the total fuel amount.

The total fuel amount is calculated from the following equation. Total fuel amount = first weight value × feedforward fuel amount + second weight value × feedback fuel amount.

In S303, the total fuel amount is transmitted to the hydrocarbon ejection device, so that the hydrocarbon ejection device ejects fuel based on the total fuel amount, so as to increase the temperature upstream of the DPF to the preset regeneration temperature.

In receipt of the total fuel amount, the HC ejection device ejects fuel based on the total fuel amount. The fuel burns in the DOC, so as to heat the exhaust gas in the DOC. Therefore, the temperature upstream of the DPF reaches the preset regeneration temperature.

In the method for controlling a temperature upstream of a DPF according to the embodiment of the present disclosure, the preset regeneration temperature, the current temperature upstream of the DPF and the current temperature upstream of the DOC are inputted into the physical model, so as to acquire the feedforward fuel amount from the physical model. Further, in the process of acquiring the feedforward fuel amount from the physical model, a combustion process of increasing the temperature upstream of the DPF to the preset regeneration temperature is simulated in the DOC, so that the feedforward fuel amount is acquired based on a fuel amount required for the combustion process. Therefore, in this method, the physical model accurately simulates the combustion process of increasing the temperature upstream of the DPF to the preset regeneration temperature based on the current temperature upstream of the DPF and the current temperature upstream of the DOC. The feedforward fuel amount is acquired accurately based on the simulated combustion process, so that the accuracy of the feedforward fuel amount is improved, thereby improving the accuracy of the total fuel amount required to be ejected by the HC ejection device. Therefore, the temperature upstream of the DPF acquired by control is prevented form exceeding or being less than the preset regeneration temperature, thereby preventing a device arranged downstream of the DPF from being burned out due to excessive temperature or avoiding frequent regeneration due to insufficient temperature.

In order to further improve the accuracy of the total fuel amount, another implementation of the method for controlling a temperature upstream of the DPF is provided according to an embodiment of the present disclosure, and is explained and described below in conjunction with the accompanying drawings.

Second Method Embodiment

The second method embodiment is improved on the basis of the first method embodiment. For the sake of brevity, some details of the second method embodiment are the same as that of the first method embodiment, which are not repeated here.

Reference is made to Figure 4, which is a flow chart of another implementation of a method for controlling a temperature upstream of a DPF according to an embodiment of the present disclosure.

The method for controlling a temperature upstream of a DPF according to this embodiment of the present disclosure includes the following steps S401 to S405.

In S401, a physical model is constructed.

In S402, by utilizing the physical model, a feedforward fuel amount is acquired based on a preset regeneration temperature, a current temperature upstream of the diesel particulate filter DPF and a current temperature upstream of the diesel oxidation catalyst DOC.

In S403, a feedback fuel amount is acquired based on a difference between a first temperature and the current temperature upstream of the DPF by utilizing a proportional-integral-differential PID algorithm.

In S404, a total fuel amount is acquired based on the feedforward fuel amount and a feedback fuel amount.

The step S404 is the same as the step S302, and is not described in detail here.

In S405, the total fuel amount is transmitted to the hydrocarbon ejection device, so that the hydrocarbon ejection device ejects fuel based on the total fuel amount, so as to increase the temperature upstream of the DPF to the preset regeneration temperature.

The step S405 is the same as the step S303, and is not described in detail here.

Details in steps S401 to S403 are described in sequence below.

Step S401 may be implemented in various manners, which are described in sequence below.

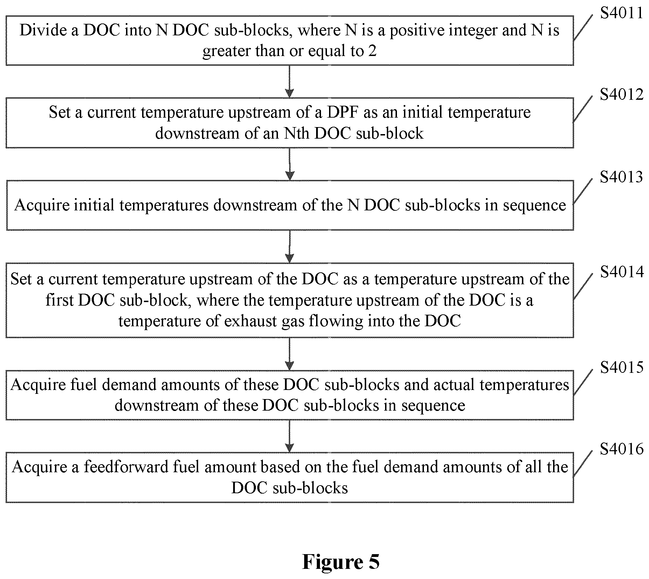

Reference is made to Figure 5, which is a flow chart of an implementation of the step S401 according to an embodiment of the present disclosure.

In an implementation, step S401 includes the following steps S4011 to S4016.

In S4011, the DOC is divided into N DOC sub-blocks, where N is a positive integer, and N is greater than or equal to 2.

Temperatures in different positions in the DOC are different. Especially, temperatures in different positions in the DOC are different along a direction in which the exhaust gas flows.

Therefore, in order to further improve the accuracy of the physical model for simulating the DOC, the DOC is divided into multiple DOC sub-blocks along the direction in which the exhaust gas flows, so as to simulate the combustion process of the fuel in each of the multiple DOC sub-blocks, thereby improving the accuracy of the physical model and further improving the accuracy of the feedforward fuel amount.

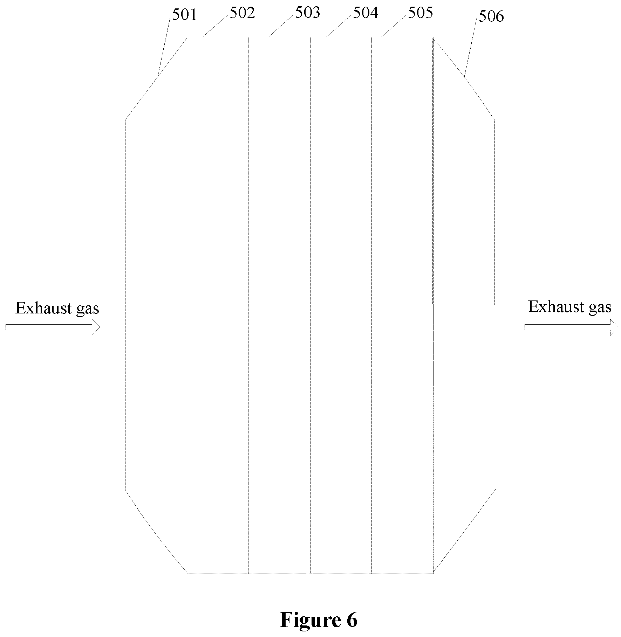

For the convenience of explanation and description, the explanation and description are given below in conjunction with Figure 6.

Reference is made to Figure 6, which is a schematic structural diagram of dividing a DOC into six DOC sub-blocks according to an embodiment of the present disclosure.

The DOC shown in Figure 6 includes a first DOC sub-block 501, a second DOC sub-block 502, a third DOC sub-block 503, a fourth DOC sub-block 504, a fifth DOC sub-block 505, and a sixth DOC sub-block 506. Any two DOC sub-blocks have different current states.

The exhaust gas passes through the first DOC sub-block 501, the second DOC sub-block 502, the third DOC sub-block 503, the fourth DOC sub-block 504, the fifth DOC sub-block 505, and the sixth DOC sub-block 506 sequentially.

N may be preset. A large N indicates that the DOC simulated by the physical model approximates an actual DOC, so that the accuracy of the physical model is high.

It should be noted that as N increases, complexity of the physical model increases, and the calculation to acquire relevant parameters of the combustion process by utilizing the physical model also increases. In this case, a load of the electronic control unit increases when performing the process. Therefore, in practical applications, N is set based on accuracy requirements of the physical model and a load rate of the electronic control unit.

In S4012, the current temperature upstream of the DPF is set as an initial temperature downstream of an $N^{th}$ DOC sub-block.

In an example, as shown in Figure 6, in the case that the DOC is divided into six sub-blocks, the current temperature upstream of the DPF is set as an initial temperature downstream of the sixth DOC sub-block 506 in S4012.

In S4013, initial temperatures downstream of the N DOC sub-blocks are acquired in sequence.

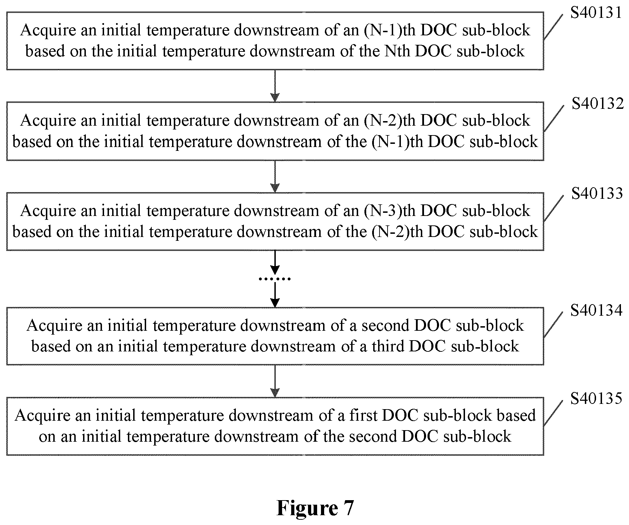

Reference is made to Figure 7, which is a flow chart of an implementation of the step S4013 according to an embodiment of the present disclosure.

In this implementation, the step S4013 may include the following steps S40131 to S40135.

In S40131, an initial temperature downstream of an $(N-1)^{th}$ DOC sub-block is acquired based on the initial temperature downstream of the $N^{th}$ DOC sub-block.

In S40132, an initial temperature downstream of an $(N-2)^{th}$ DOC sub-block is acquired based on the initial temperature downstream of the $(N-1)^{th}$ DOC sub-block.

In S40133, an initial temperature downstream of an $(N-3)^{th}$ DOC sub-block is acquired based on the initial temperature downstream of the $(N-2)^{th}$ DOC sub-block. ...

In S40134, an initial temperature downstream of a second DOC sub-block is acquired based on an initial temperature downstream of a third DOC sub-block.

In S40135, an initial temperature downstream of a first DOC sub-block is acquired based on an initial temperature downstream of the second DOC sub-block.

In another implementation, in order to improve accuracy of the initial temperatures downstream of different DOC sub-blocks, S4013 includes: acquiring an initial temperature downstream of an $(N-i-1)^{th}$ DOC sub-block based on an initial temperature downstream of an $(N-i)^{th}$ DOC sub-block and a first heat dissipation parameter, where i is a positive integer, and i is greater than or equal to 0 and is less than or equal to N-2.

The first heat dissipation parameter includes an ambient temperature outside the DOC, a heat dissipation factor and the exhaust heat capacity.

It should be noted that the first heat dissipation parameter may be preset or may be determined based on a state of the engine.

Moreover, in an implementation, the initial temperature downstream of the (N-i-1)$^{th}$ DOC sub-block is acquired based on the initial temperature downstream of the (N-i)$^{th}$ DOC sub-block and the first heat dissipation parameter from the following equation.

$$t_{N-i-1} = t_{N-i} + ((t_{N-i} - t_{env}) \times facHeatLoss) \div CpEG \qquad (1)$$

In the equation (1), $t_{n-i-1}$ represents an initial temperature downstream of the (N-i-1)$^{th}$ DOC sub-block, $t_{N-i}$ represents an initial temperature downstream of the (N-i)$^{th}$ DOC sub-block, $t_{env}$ represents an ambient temperature outside the DOC, facHeatLoss represents a heat dissipation factor, and CpEG represents exhaust heat capacity.

In S4014, a current temperature upstream of the DOC is set as a temperature upstream of the first DOC sub-block. The temperature upstream of the DOC is a temperature of the exhaust gas flowing into the DOC.

In an example, as shown in Figure 6, in the case that the DOC is divided into six sub-blocks, in S4014, the current temperature upstream of the DOC is set as the temperature upstream of the first DOC sub-block.

In S4015, fuel demand amounts of these DOC sub-blocks and actual temperatures downstream of these DOC sub-blocks are acquired in sequence.

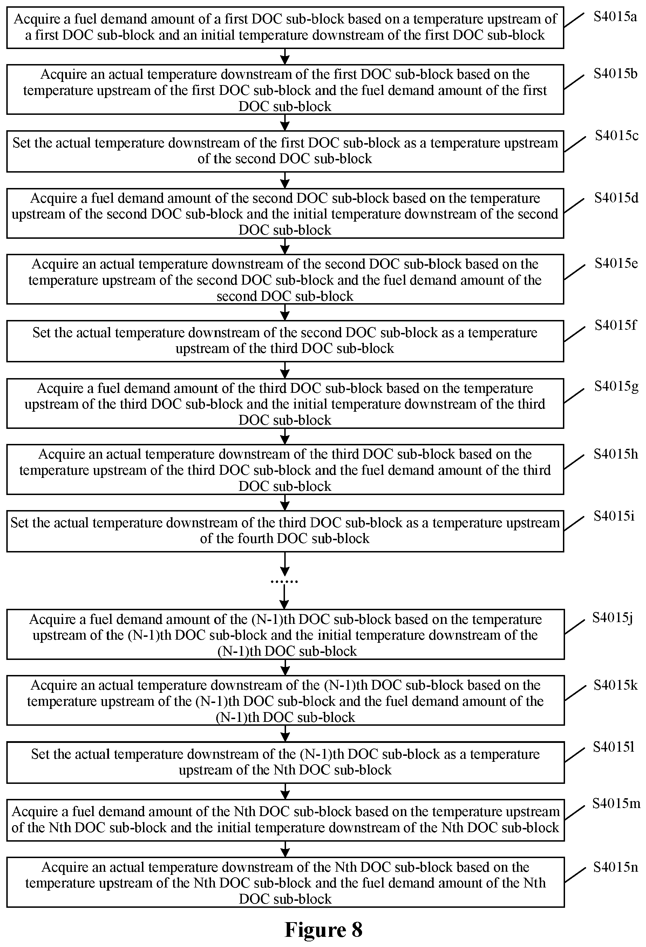

Reference is made to Figure 8, which is a flow chart of an implementation of the step S4015 according to an embodiment of the present disclosure.

In S4015a, a fuel demand amount of the first DOC sub-block is acquired based on a temperature upstream of the first DOC sub-block and the initial temperature downstream of the first DOC sub-block.

In S4015b, an actual temperature downstream of the first DOC sub-block is acquired based on the temperature upstream of the first DOC sub-block and the fuel demand amount of the first DOC sub-block.

In S4015c, the actual temperature downstream of the first DOC sub-block is set as a temperature upstream of the second DOC sub-block.

In S4015d, a fuel demand amount of the second DOC sub-block is acquired based on the temperature upstream of the second DOC sub-block and the initial temperature downstream of the second DOC sub-block.

In S4015e, an actual temperature downstream of the second DOC sub-block is acquired based on the temperature upstream of the second DOC sub-block and the fuel demand amount of the second DOC sub-block.

In S4015f, the actual temperature downstream of the second DOC sub-block is set as a temperature upstream of the third DOC sub-block.

In S4015g, a fuel demand amount of the third DOC sub-block is acquired based on the temperature upstream of the third DOC sub-block and the initial temperature downstream of the third DOC sub-block.

In S4015h, an actual temperature downstream of the third DOC sub-block is acquired based on the temperature upstream of the third DOC sub-block and the fuel demand amount of the third DOC sub-block.

In S4015i, the actual temperature downstream of the third DOC sub-block is set as a temperature upstream of the fourth DOC sub-block. ...

In S4015j, a fuel demand amount of the (N-1)$^{th}$ DOC sub-block is acquired based on the temperature upstream of the (N-1)$^{th}$ DOC sub-block and the initial temperature downstream of the (N-1)$^{th}$ DOC sub-block.

In S4015k, an actual temperature downstream of the (N-1)$^{th}$ DOC sub-block is acquired based on the temperature upstream of the (N-1)$^{th}$ DOC sub-block and the fuel demand amount of the (N-1)$^{th}$ DOC sub-block.

In S4015l, the actual temperature downstream of the (N-1)$^{th}$ DOC sub-block is set as a temperature upstream of the N$^{th}$ DOC sub-block.

In S4015m, a fuel demand amount of the N$^{th}$ DOC sub-block is acquired based on the temperature upstream of the Nth DOC sub-block and the initial temperature downstream of the N$^{th}$ DOC sub-block.

In S4015n, an actual temperature downstream of the N$^{th}$ DOC sub-block is acquired based on the temperature upstream of the N$^{th}$ DOC sub-block and the fuel demand amount of the N$^{th}$ DOC sub-block.

In another implementation, in order to improve accuracy of fuel demand amounts of these DOC sub-blocks, in S4015, the acquiring a fuel demand amount of a j$^{th}$ DOC sub-block based on a temperature upstream of the j$^{th}$ DOC sub-block and an initial temperature downstream of the j$^{th}$ DOC sub-block, and where j is a positive integer and j is greater than or equal to 1 and less than or equal to N-1 includes: acquiring the fuel demand amount of the j$^{th}$ DOC sub-block based on the temperature upstream of the j$^{th}$ DOC sub-block, the initial temperature downstream of the j$^{th}$ DOC sub-block and a second heat dissipation parameter, where j is a positive integer and j is greater than or equal to 1 and less than or equal to N-1.

The second heat dissipation parameter includes an ambient temperature outside the DOC, a heat dissipation factor, exhaust heat capacity and a fuel calorific value.

It should be noted that the second heat dissipation parameter may be preset or may be determined based on a state of the engine.

Moreover, in an implementation, the fuel demand amount of the j$^{th}$ DOC sub-block is acquired based on the temperature upstream of the $j^{th}$ DOC sub-block, the initial temperature downstream of the $j^{th}$ DOC sub-block and the second heat dissipation parameter from the following equation.

$$Q_j=((t_j- t_{env})\times facHeatLoss+(t_j -tup_j)\times CpEG)\div facFu \qquad (2)$$

In the equation (2), $Q_j$ represents a fuel demand amount of the $j^{th}$ DOC sub-block, $t_j$ represents an initial temperature downstream of the $j^{th}$ DOC sub-block, $t_{env}$ represents an ambient temperature outside the DOC, facHeatLoss represents a heat dissipation factor, $tup_j$ represents a temperature upstream of the $j^{th}$ DOC sub-block, CpEG represents exhaust heat capacity, and facFu represents a fuel calorific value.

It should be noted that the fuel calorific value may be determined based on a type of the fuel.

In another implementation, in order to improve accuracy of actual temperatures downstream of these DOC sub-blocks, in S4015, the acquiring an actual temperature downstream of the $j^{th}$ DOC sub-block based on a temperature upstream of the $j^{th}$ DOC sub-block and the fuel demand amount of the $j^{th}$ DOC sub-block and where j is a positive integer and j is greater than or equal to 1 and less than or equal to N-1 includes: acquiring the actual temperature downstream of the $j^{th}$ DOC sub-block based on the temperature upstream of the $j^{th}$ DOC sub-block, the fuel demand amount of the $j^{th}$ DOC sub-block and a third heat dissipation parameter, where j is a positive integer and j is greater than or equal to 1 and less than or equal to N-1.

The third heat dissipation parameter includes an ambient temperature outside the DOC, a heat dissipation factor, exhaust heat capacity and a fuel calorific value.

It should be noted that the third heat dissipation parameter may be preset or may be determined based on a state of the engine.

Moreover, the actual temperature downstream of the $j^{th}$ DOC sub-block is acquired based on the temperature upstream of the $j^{th}$ DOC sub-block, the fuel demand amount of the $j^{th}$ DOC sub-block and the third heat dissipation parameter from the following equation.

$$T_j=(Q_j\times facFu+ t_{env}\times facHeatLoss+ tup_j\times CpEG)\div(facHeatLoss+CpEG) \qquad (3)$$

In the equation (2), $T_j$ represents an actual temperature downstream of the $j^{th}$ DOC sub-block, $Q_1$ represents a fuel demand amount of the $j^{th}$ DOC sub-block, facFu represents a fuel calorific value, $t_{env}$ represents an ambient temperature outside the DOC, facHeatLoss represents a heat dissipation factor, $tup_j$ represents a temperature upstream of the $j^{th}$ DOC sub-block, and CpEG represents exhaust heat capacity.

It should be noted that the fuel calorific value may be determined based on a type of the fuel.

In S4016, the feedforward fuel amount is acquired based on the fuel demand amounts of all the DOC sub-blocks.

In an implementation, in S4016, fuel demand amounts of the first DOC sub-block to the $N^{th}$ DOC sub-block are added, and a sum of the fuel demand amounts of the first DOC sub-block to the $N^{th}$ DOC sub-block is set as the feedforward fuel amount.

In another implementation, in order to further improve the accuracy of the feedforward fuel amount, in S4016, the feedforward fuel amount is acquired based on the fuel demand amounts of all the DOC sub-blocks and fuel conversion rates. The fuel demand amounts of all the DOC sub-blocks corresponds to the fuel conversion rates one-to-one.

In this implementation, the feedforward fuel amount is calculated from the following equation.

$$Q_{all} = \frac{\sum_{j=1}^{N} Q_j}{1 - \prod_{m=1}^{N}(1 - e_m)} \qquad (4)$$

In the equation (4), $Q_{all}$ represents the feedforward fuel amount, $Q_j$ represents a fuel demand amount of a $j^{th}$ DOC sub-block, $e_j$ represents a fuel conversion rate corresponding to the fuel demand amount of the $j^{th}$ DOC sub-block, and

$$\prod_{m=1}^{N}(1 - e_m) = (1 - e_1) \times (1 - e_2) \times (1 - e_3) \times \cdots \times (1 - e_{N-1}) \times (1 - e_N)$$

In this way, by considering fuel efficiency of each DOC sub-block, the accuracy of the feedforward fuel amount is further improved, and a utilization rate of the fuel is also improved.

An implementation of S401 is described in detail above. In this implementation, the DOC is divided into more than 2 DOC sub-blocks, fuel demand amounts of the more than 2 DOC sub-blocks and actual temperatures downstream of the more than 2 DOC sub-blocks are calculated, so that the feedforward fuel amount of the DOC is accurately acquired based on the fuel demand amounts of all the DOC sub-blocks.

In order to facilitate understanding by those skilled in the art, S401 is described below with N=2 as an example.

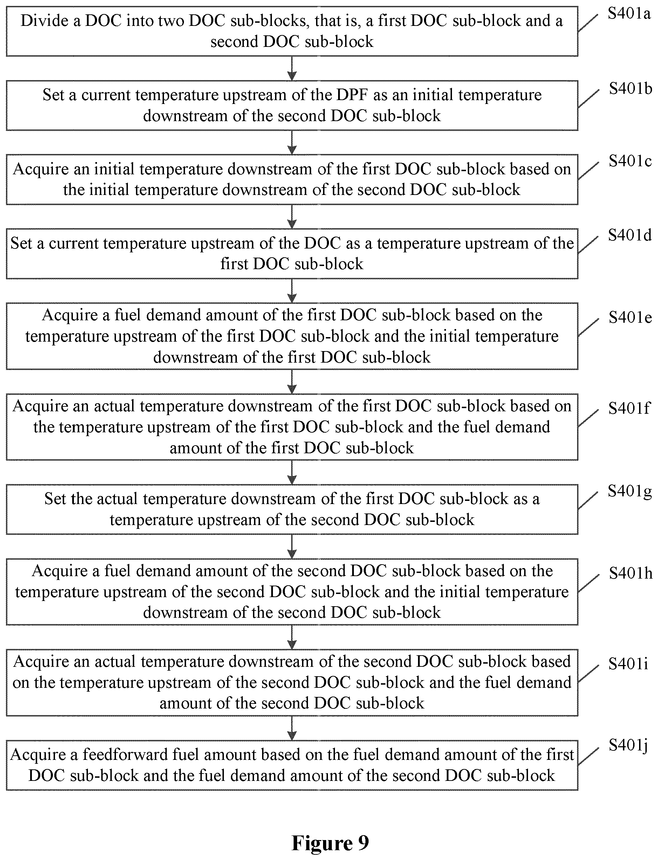

Reference is made to Figure 9, which is a flow chart of an implementation of the step S401 in a case of N=2 according to an embodiment of the present disclosure.

In the case of N=2, the step S401 may include the following steps S401a to S401j.

In S401a, the DOC is divided into two DOC sub-blocks, that is, a first DOC sub-block and a second DOC sub-block.

In S401b, a current temperature upstream of the DPF is set as an initial temperature downstream of the second DOC sub-block.

In S401c, an initial temperature downstream of the first DOC sub-block is acquired based on the initial temperature downstream of the second DOC sub-block.

In S401d, a current temperature upstream of the DOC is set as a temperature upstream of the first DOC sub-block.

In S401e, a fuel demand amount of the first DOC sub-block is acquired based on the temperature upstream of the first DOC sub-block and the initial temperature downstream of the first DOC sub-block.

In S401f, an actual temperature downstream of the first DOC sub-block is acquired based on the temperature upstream of the first DOC sub-block and the fuel demand amount of the first DOC sub-block.

In S401g, the actual temperature downstream of the first DOC sub-block is set as a temperature upstream of the second DOC sub-block.

In S401h, a fuel demand amount of the second DOC sub-block is acquired based on the temperature upstream of the second DOC sub-block and the initial temperature downstream of the second DOC sub-block.

In S401i, an actual temperature downstream of the second DOC sub-block is acquired based on the temperature upstream of the second DOC sub-block and the fuel demand amount of the second DOC sub-block.

In S401j, the feedforward fuel amount is acquired based on the fuel demand amount of the first DOC sub-block and the fuel demand amount of the second DOC sub-block.

It should be noted that the above description is based on the implementation in which the DOC is divided into two DOC sub-blocks. However, in S401 according to the embodiment of the present disclosure, the DOC is divided into more than two DOC sub-blocks, which is not limited in the present disclosure.

The implementation of S401 is described above.

The implementation of S402 is described below.

In an implementation manner, in S402, the preset regeneration temperature, the current temperature upstream of the DPF, and the current temperature upstream of the DOC serve as input parameters and are inputted into the physical model constructed in S401, so as to acquire the feedforward fuel amount.

In this case, the physical model constructed in S401 accurately simulates the combustion process in the DOC. Therefore, the feedforward fuel amount is accurately acquired based on the physical model constructed by S401, so as to acquire the total fuel amount accurately, thereby preventing the temperature upstream of the DPF from exceeding the preset regeneration temperature, and further preventing a device arranged downstream of the DPF from being burned out.

The implementation of S402 is described above.

The implementation of S403 is described below.

The first temperature may be preset or may be determined based on the preset regeneration temperature.

In an implementation, in a case that the first temperature serves as the preset regeneration temperature, in S403, the feedback fuel amount is acquired based on a difference between the preset regeneration temperature and the current temperature upstream of the DPF by utilizing the proportional-integral-differential PID algorithm.

In another implementation, in order to further improve the accuracy of the feedback fuel amount, in S403, an actual temperature downstream of a last DOC sub-block is acquired based on the preset regeneration temperature, the current temperature upstream of the DPF, and the current temperature upstream of the DOC that are inputted into the physical model, and the feedback fuel amount is acquired based on a difference between the actual temperature downstream of the last DOC sub-block and the current temperature upstream of the DPF by utilizing the proportional-integral-differential PID algorithm.

In an example, in the case that the DOC includes the first DOC sub-block and the second DOC sub-block, in 403, the feedback fuel amount is acquired based on a difference between the actual temperature downstream of the second DOC sub-block and the current temperature upstream of the DPF by utilizing the proportional-integral-differential PID algorithm.

The implementation of S402 is described above.

In the method for controlling a temperature upstream of a DPF according to the embodiment of the present disclosure, the DOC is divided into more than two DOC sub-blocks, and combustion process in different DOC sub-blocks is utilized to simulate combustion process at different positions in the DOC, so that the physical model simulating the DOC accurately simulates the actual combustion process in the DOC, so as to acquire an accurate feedforward fuel amount based on the combustion process, thereby improving the accuracy of the total fuel amount. Therefore, the temperature upstream of the DPF acquired by control is prevented form exceeding or being less than the preset regeneration temperature, thereby preventing a device arranged downstream of the DPF from being burned out due to an excessive temperature or avoiding frequent regeneration due to an insufficient temperature. Moreover, in this method, the accuracy of the feedforward fuel amount is further improved based on the fuel demand amounts of all the DOC sub-blocks and fuel conversion rates respectively corresponding to the fuel demand amounts of all the DOC sub-blocks, so as to further improve the accuracy of the total fuel amount, which prevents the temperature upstream of the DPF from exceeding the preset regeneration temperature, thereby preventing a device arranged downstream of the DPF from being burned out due to excessive temperature.

In addition, in the method for controlling a temperature upstream of a DPF according to the embodiment of the present disclosure, the actual temperature downstream of the last DOC sub-block is acquired by utilizing the physical model, so as to acquire the feedback fuel amount based on the difference between the actual temperature downstream of the last DOC sub-block and the current temperature upstream of the DPF by utilizing the proportional-integral-differential PID algorithm. In this way, the accuracy of the feedback fuel amount is improved, so that the accuracy of the total fuel amount is improved, and the temperature upstream of the DPF is prevented from exceeding the preset regeneration temperature, thereby preventing the device arranged downstream of the DPF from being burned out due to an excessive temperature.

In order to improve the utilization rate of the fuel, another implementation of the method for controlling a temperature upstream of the DPF is provided according to an embodiment of the present disclosure, and is explained and described below in conjunction with the accompanying drawings.

Third Method Embodiment

The third method embodiment is improved on the basis of the first method embodiment or the second method embodiment. For the sake of brevity, the third method embodiment is explained and illustrated below by taking improvements based on the first method embodiment as an example. Some details of the third method embodiment that are the same as that of the first method embodiment are not described in detail here.

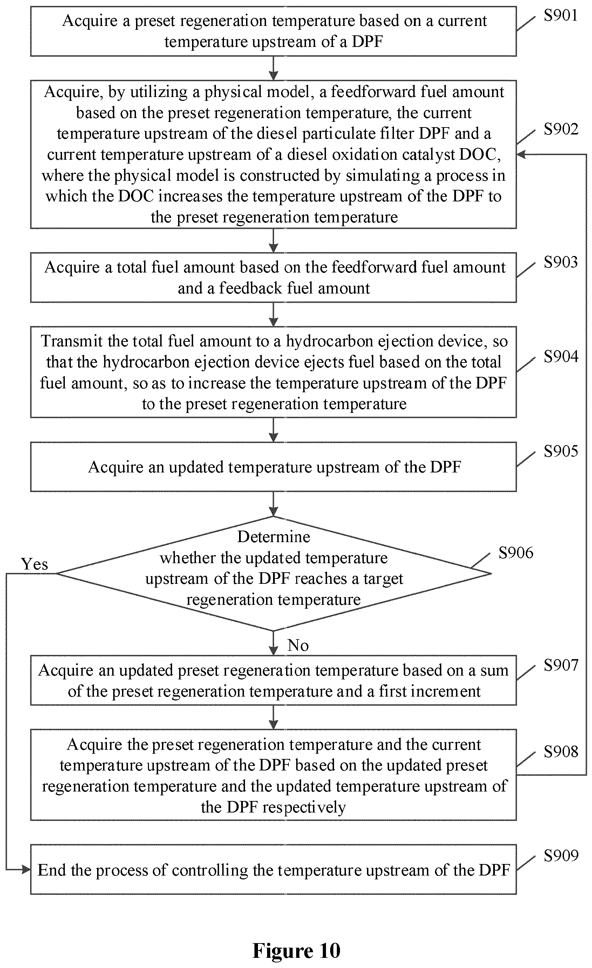

Reference is made to Figure 10, which is a flow chart of a method for controlling a temperature upstream of a DPF according to another embodiment of the present disclosure.

The method for controlling a temperature upstream of a DPF according to this embodiment of the present disclosure includes the following steps S901 to S909.

In S901, a preset regeneration temperature is acquired based on a current temperature upstream of the DPF.

In an implementation, in S901, the preset regeneration temperature is acquired based on a sum of the current temperature upstream of the DPF and a second increment. The second increment is greater than 0, and has a small value.

For example, it is assumed that the current temperature upstream of the DPF is 400°C and the second increment is 10°C. In S901, a preset regeneration temperature of 410°C is acquired based on a sum of the current temperature upstream of the DPF equaling to 400°C and the second increment of 10°C.

In S902, by utilizing a physical model, a feedforward fuel amount is acquired based on the preset regeneration temperature, the current temperature upstream of the diesel particulate filter DPF and a current temperature upstream of the diesel oxidation catalyst DOC. The physical model is constructed by simulating a process in which the DOC increases the temperature upstream of the DPF to the preset regeneration temperature.

The step S902 is the same as the step S301, and is not described in detail here.

In S903, a total fuel amount is acquired based on the feedforward fuel amount and a feedback fuel amount.

The step S903 is the same as the step S302, and is not described in detail here.

In S904, the total fuel amount is transmitted to the hydrocarbon ejection device, so that the hydrocarbon ejection device ejects fuel based on the total fuel amount, so as to increase the temperature upstream of the DPF to the preset regeneration temperature.

The step S904 is the same as the step S303, and is not described in detail here.

In S905, an updated temperature upstream of the DPF is acquired.

In S906, it is determined whether the updated temperature upstream of the DPF reaches a target regeneration temperature. In a case that the updated temperature upstream of the DPF reaches the target regeneration temperature, S909 is performed. In a case that the updated temperature upstream of the DPF does not reach the target regeneration temperature, S907 is performed.

The target regeneration temperature is required for the regeneration of the DPF.

For example, the DPF is required to be regenerated at a temperature of 600°C. Therefore, the target regeneration temperature is 600°C.

In S907, an updated preset regeneration temperature is acquired based on a sum of the preset regeneration temperature and a first increment.

The first increment may be acquired based on a specific rule. For example, the first temperature is a fixed temperature or a non-fixed temperature.

It should be noted that, no matter how the first increment is acquired, the sum of the first increment and the preset regeneration temperature cannot exceed the target regeneration temperature.

In an implementation, the first increment is a fixed temperature, in S907, the updated preset regeneration temperature is a sum of a regeneration temperature and the fixed temperature. In this way, in a case that the feedforward fuel amount is acquired periodically by utilizing the physical model, a preset regeneration temperature corresponding to a previous period is increased by the fixed temperature to obtain a preset regeneration temperature corresponding to a subsequent period.

In an implementation, the first increment is a non-fixed temperature, in S907, the updated preset regeneration temperature is a sum of the regeneration temperature and the non-fixed temperature. In this way, in a case that the feedforward fuel amount is acquired periodically by utilizing the physical model, a preset regeneration temperature corresponding to a period is increased by the non-fixed temperature to obtain a preset regeneration temperature corresponding to a subsequent period.

In S908, the preset regeneration temperature and the current temperature upstream of the DPF are acquired based on the updated preset regeneration temperature and the updated temperature upstream of the DPF respectively, so as to return to S902.

In an implementation, in 908, the preset regeneration temperature is equal to the updated preset regeneration temperature, and the current temperature upstream of the DPF is equal to the updated temperature upstream of the DPF.

In S909, the process of controlling the temperature upstream of the DPF ends.

In the method for controlling a temperature upstream of a DPF according to the embodiment of the present disclosure, the feedforward fuel amount is acquired periodically by utilizing the physical model, a preset regeneration temperature corresponding to a previous period is increased by a fixed temperature or a non-fixed temperature to obtain a preset regeneration temperature corresponding to a subsequent period, so that the temperature upstream of the DPF gradually approximates the target regeneration temperature. When the temperature upstream of the DPF reaches the target regeneration temperature, the process of controlling the temperature upstream of the DPF ends. In this way, the temperature upstream of the DPF is controlled to gradually approximate the target regeneration temperature, so that the temperature upstream of the DPF acquired by the control is prevented from exceeding or being less than the target regeneration temperature during control, thereby preventing a device arranged downstream of the DPF from being burned out due to an excessive temperature or avoiding incomplete regeneration due to an insufficient temperature. Further, waste of the fuel resulted from that the temperature upstream of the DPF exceeds the target regeneration temperature during the control is avoided, thereby improving the utilization rate of the fuel. Furthermore, an excessive time period resulted from that the temperature upstream of the DPF exceeds the target regeneration temperature during the control is avoided, thereby shortening a time period required for the temperature upstream of the DPF to reach the target regeneration temperature, and improving efficiency of temperature control. In addition, the DOC periodically controls the HC ejection device to eject fuel, avoiding fuel waste due to insufficient combustion resulted from excessive fuel ejection, thereby improving utilization of the fuel.

Based on the method for controlling a temperature upstream of a DPF according to the foregoing embodiments, a device for controlling a temperature upstream of a DPF is further provided according to an embodiment of the present disclosure, and is explained and described below in conjunction with the accompanying drawings.

Device Embodiment

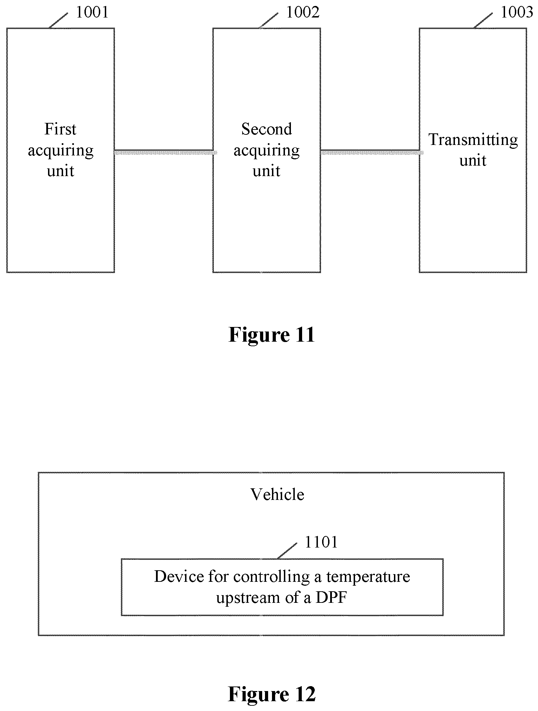

Reference is made to Figure 11, which is a structural schematic diagram of a device for controlling a temperature upstream of a DPF according to an embodiment of the present disclosure.

The device for controlling a temperature upstream of a DPF according to the embodiment of the present disclosure includes a first acquiring unit 1001, a second acquiring unit 1002 and a transmitting unit 1003.

The first acquiring unit 1001 is configured to acquire, by utilizing a physical model, a feedforward fuel amount based on a preset regeneration temperature, a current temperature upstream of a diesel particulate filter DPF and a current temperature upstream of a diesel oxidation catalyst DOC. The physical model is constructed by simulating a process in which the DOC increases the temperature upstream of the DPF to the preset regeneration temperature.

The second acquiring unit 1002 is configured to acquire a total fuel amount based on the feedforward fuel amount and a feedback fuel amount.

The transmitting unit 1003 is configured to transmit the total fuel amount to a hydrocarbon ejection device, so that the hydrocarbon ejection device ejects fuel based on the total fuel amount, so as to increase the temperature upstream of the DPF to the preset regeneration temperature.

In another implementation, in order to improve the accuracy of the feedforward fuel amount, and further improve the accuracy of the total fuel amount, the first acquiring unit 1001 includes a dividing subunit, a first setting subunit, a first acquiring subunit, a second setting subunit, a second acquiring subunit, a third acquiring subunit, a third setting subunit, a fourth acquiring subunit, a fifth acquiring subunit, and a sixth acquiring subunit.

The dividing subunit is configured to divide the DOC into at least two DOC sub-blocks. The at least two DOC sub-blocks include a first DOC sub-block and a second DOC sub-block.

The first setting subunit is configured to set a current temperature upstream of the DPF as an initial temperature downstream of the second DOC sub-block.

The first acquiring subunit is configured to acquire an initial temperature downstream of the first DOC sub-block based on the initial temperature downstream of the second DOC sub-block.

The second setting subunit is configured to set a current temperature upstream of the DOC as a temperature upstream of the first DOC sub-block.

The second acquiring subunit is configured to acquire a fuel demand amount of the first DOC sub-block based on the temperature upstream of the first DOC sub-block and the initial temperature downstream of the first DOC sub-block.

The third acquiring subunit is configured to acquire an actual temperature downstream of the first DOC sub-block based on the temperature upstream of the first DOC sub-block and the fuel demand amount of the first DOC sub-block.

The third setting subunit is configured to set the actual temperature downstream of the first DOC sub-block as a temperature upstream of the second DOC sub-block.

The fourth acquiring subunit is configured to acquire a fuel demand amount of the second DOC sub-block based on the temperature upstream of the second DOC sub-block and the initial temperature downstream of the second DOC sub-block.

The fifth acquiring subunit is configured to acquire an actual temperature downstream of the second DOC sub-block based on the temperature upstream of the second DOC sub-block and the fuel demand amount of the second DOC sub-block.

The sixth acquiring subunit is configured to acquire the feedforward fuel amount based on the fuel demand amount of the first DOC sub-block and the fuel demand amount of the second DOC sub-block.

In another implementation, in order to improve the accuracy of the feedforward fuel amount, and further improve the accuracy of the total fuel amount, the device for controlling a temperature upstream of a DPF according to the present disclosure further includes a third acquiring unit. The third acquiring unit is configured to acquire the feedback fuel amount based on a difference between the actual temperature downstream of the second DOC sub-block and the current temperature upstream of the DPF by utilizing a proportional-integral-differential PID algorithm.

In another implementation, in order to further improve the accuracy of the feedforward fuel amount, and further improve the accuracy of the total fuel amount, the sixth acquiring subunit is configured to acquire the feedforward fuel amount based on the fuel demand amount of the first DOC sub-block, a first fuel conversion rate corresponding to the fuel demand amount of the first DOC sub-block, the fuel demand amount of the second DOC sub-block and a second fuel conversion rate corresponding to the fuel demand amount of the second DOC sub-block.

In another implementation, in order to improve the utilization rate of the fuel and efficiency of temperature control, the first acquiring unit 1001 is configured to acquire the feedforward fuel amount periodically by utilizing the physical model. A preset regeneration temperature corresponding to a previous period is increased by a fixed temperature or a non-fixed temperature to obtain a preset regeneration temperature corresponding to a subsequent period. The preset regeneration temperature ranges from the current temperature upstream of the DPF to the target regeneration temperature.

The device for controlling a temperature upstream of a DPF according to the present disclosure includes the first acquiring unit 1001, the second acquiring unit 1002 and the transmitting unit 1003. With this device, the preset regeneration temperature, the current temperature upstream of the DPF and the current temperature upstream of the DOC are inputted into the physical model, so as to acquire the feedforward fuel amount from the physical model. Further, in the process of acquiring the feedforward fuel amount from the physical model, a combustion process of increasing the temperature upstream of the DPF to the preset regeneration temperature is simulated in the DOC, so that the feedforward fuel amount is acquired based on a fuel amount required for the combustion process. Therefore, in this device, the physical model accurately simulates the combustion process of increasing the temperature upstream of the DPF to the preset regeneration temperature based on the current temperature upstream of the DPF and the current temperature upstream of the DOC. Therefore, the feedforward fuel amount is acquired accurately based on the simulated combustion process, so that the accuracy of the feedforward fuel amount is improved, thereby improving the accuracy of the total fuel amount required to be ejected by the HC ejection device. Therefore, the temperature upstream of the DPF acquired by control is prevented form exceeding or being less than the preset regeneration temperature, thereby preventing a device arranged downstream of the DPF from being burned out due to excessive temperature or avoiding frequent regeneration due to insufficient temperature.

Based on the method and the device for controlling a temperature upstream of a DPF according to the foregoing embodiments, a vehicle is further provided according to an embodiment of the present disclosure, and is explained and described below in conjunction with the accompanying drawings.

Vehicle Embodiment

Reference is made to Figure 12, which is a structural schematic diagram of a vehicle according to an embodiment of the present disclosure.

The vehicle according to the embodiment of the present disclosure includes a device 1101 for controlling a temperature upstream of a DPF. The device 1101 for controlling a temperature upstream of a DPF is the device for controlling a temperature upstream of a DPF according to any one of the above embodiments.

The vehicle according to the embodiment of the present disclosure includes the device 1101 for controlling a temperature upstream of a DPF. Therefore, with the vehicle, a preset regeneration temperature, a current temperature upstream of the DPF and a current temperature upstream of the DOC are inputted into a physical model, so as to acquire a feedforward fuel amount from the physical model. Further, in the process of acquiring the feedforward fuel amount from the physical model, a combustion process of increasing the temperature upstream of the DPF to the preset regeneration temperature is simulated in the DOC, so that the feedforward fuel amount is acquired based on a fuel amount required for the combustion process. Therefore, in this vehicle, the physical model accurately simulates the combustion process of increasing the temperature upstream of the DPF to the preset regeneration temperature based on the current temperature upstream of the DPF and the current temperature upstream of the DOC. Therefore, the feedforward fuel amount is acquired accurately based on the simulated combustion process, so that the accuracy of the feedforward fuel amount is improved, thereby improving the accuracy of the total fuel amount required to be ejected by the HC ejection device. Therefore, the temperature upstream of the DPF acquired by control is prevented form exceeding or being less than the preset regeneration temperature, thereby preventing a device arranged downstream of the DPF from being burned out due to excessive temperature or avoiding frequent regeneration due to insufficient temperature.

It should be understood that in this specification, "at least one (item)" refers to one or more, and "multiple" refers to two or more. A statement "and/or" is used to describe association relationship of associated objects, indicating that there may be three types of relationships. For example, a statement "A and/or B" may indicate a case of only A, a case of only B, or a case of both A and B, where A and B may be singular or plural. A character "/" generally indicates that the previous and subsequent objects are in an "or" relationship. A statement of "at least one (item) of the following" or similar expressions refers to any combination of these items, including any combination of single (item) or plural (items). For example, a statement "at least one of a, b, or c" may indicate a case of "only a", a case of "only b", a case of "only c", a case of "a and b", a case of "a and c", a case of "b and c", or a case of "both a, b and c", where a, b, and c may be single or multiple.

## Claims

1. A method for controlling a temperature upstream of a DPF (105), comprising:

acquiring, by utilizing a physical model, a feedforward fuel amount based on a preset regeneration temperature, a current temperature upstream of the diesel particulate filter DPF (105) and a current temperature upstream of a diesel oxidation catalyst DOC (103), wherein the physical model is constructed by simulating a process in which the DOC (103) increases the temperature upstream of the DPF (105) to the preset regeneration temperature;
acquiring a total fuel amount based on the feedforward fuel amount and a feedback fuel amount;
transmitting the total fuel amount to a hydrocarbon ejection device, wherein the hydrocarbon ejection device ejects fuel based on the total fuel amount, to increase the temperature upstream of the DPF (105) to the preset regeneration temperature; and wherein the constructing the physical model by simulating the process in which the DOC (103) increases the temperature upstream of the DPF (105) to the preset regeneration temperature comprises:

dividing the DOC (103) into at least two DOC sub-blocks, wherein the at least two DOC sub-blocks comprise a first DOC sub-block (501) and a second DOC sub-block (502), and the exhaust gas flows through the first DOC sub-block (501) and the second DOC sub-block (502) sequentially;
setting the current temperature upstream of the DPF (105) as an initial temperature downstream of the second DOC sub-block (502), wherein the current temperature upstream of the DPF (105) is acquired by a temperature sensor (104) arranged upstream of the DPF (105);
acquiring an initial temperature downstream of the first DOC sub-block (501) based on the initial temperature downstream of the second DOC sub-block (502);
setting the current temperature upstream of the DOC (103) as a temperature upstream of the first DOC sub-block (501), wherein the current temperature upstream of the DOC (103) is acquired by a temperature sensor (101) arranged upstream of the DOC (103);
acquiring a fuel demand amount of the first DOC sub-block (501) based on the temperature upstream of the first DOC sub-block (501) and the initial temperature downstream of the first DOC sub-block (501);

acquiring an actual temperature downstream of the first DOC sub-block (501) based on the temperature upstream of the first DOC sub-block (501) and the fuel demand amount of the first DOC sub-block (501);

setting the actual temperature downstream of the first DOC sub-block (501) as a temperature upstream of the second DOC sub-block (502);

acquiring a fuel demand amount of the second DOC sub-block (502) based on the temperature upstream of the second DOC sub-block (502) and the initial temperature downstream of the second DOC sub-block (502);

acquiring an actual temperature downstream of the second DOC sub-block (502) based on the temperature upstream of the second DOC sub-block (502) and the fuel demand amount of the second DOC sub-block (502); and

acquiring the feedforward fuel amount based on the fuel demand amount of the first DOC sub-block (501) and the fuel demand amount of the second DOC sub-block (502).

2. The method according to claim 1, wherein before the acquiring a total fuel amount based on the feedforward fuel amount and a feedback fuel amount, the method further comprises:
acquiring the feedback fuel amount based on a difference between the actual temperature downstream of the second DOC sub-block (502) and the current temperature upstream of the DPF (105) by utilizing a proportional-integral-differential PID algorithm.

3. The method according to claim 1, wherein the acquiring the feedforward fuel amount based on the fuel demand amount of the first DOC sub-block (501) and the fuel demand amount of the second DOC sub-block (502) comprises:
acquiring the feedforward fuel amount based on the fuel demand amount of the first DOC sub-block (501), a first fuel conversion rate corresponding to the fuel demand amount of the first DOC sub-block (501), the fuel demand amount of the second DOC sub-block (502) and a second fuel conversion rate corresponding to the fuel demand amount of the second DOC sub-block (502).

4. The method according to claim 1, wherein the acquiring, by utilizing a physical model, a feedforward fuel amount comprises:
acquiring the feedforward fuel amount periodically by utilizing the physical model, wherein a preset regeneration temperature corresponding to a previous period is increased by a fixed temperature or a non-fixed temperature to obtain a preset regeneration temperature corresponding to a subsequent period, and the preset regeneration temperature ranges from the current temperature upstream of the DPF (105) to a target regeneration temperature.

5. A device for controlling a temperature upstream of a DPF (105), comprising:

a first acquiring unit configured to acquire, by utilizing a physical model, a feedforward fuel amount based on a preset regeneration temperature, a current temperature upstream of a diesel particulate filter DPF (105) and a current temperature upstream of a diesel oxidation catalyst DOC (103), wherein the physical model is constructed by simulating a process in which the DOC (103) increases the temperature upstream of the DPF (105) to the preset regeneration temperature;

a second acquiring unit configured to acquire a total fuel amount based on the feedforward fuel amount and a feedback fuel amount;

a transmitting unit configured to transmit the total fuel amount to a hydrocarbon ejection device, wherein the hydrocarbon ejection device ejects fuel based on the total fuel amount, to increase the temperature upstream of the DPF (105) to the preset regeneration temperature; and wherein the first acquiring unit comprises:

a dividing subunit configured to divide the DOC (103) into at least two DOC sub-blocks, wherein the at least two DOC sub-blocks comprise a first DOC sub-block (501) and a second DOC sub-block (502), and the exhaust gas flows through the first DOC sub-block (501) and the second DOC sub-block (502) sequentially;

a first setting subunit configured to set the current temperature upstream of the DPF (105) as an initial temperature downstream of the second DOC sub-block (502) , wherein the current temperature upstream of the DPF (105) is acquired by a temperature sensor (104) arranged upstream of the DPF (105);

a first acquiring subunit configured to acquire an initial temperature downstream of the first DOC sub-block (501) based on the initial temperature downstream of the second DOC sub-block (502), ;

a second setting subunit configured to set the current temperature upstream of the DOC (103) as a temperature upstream of the first DOC sub-block (501), wherein the current temperature upstream of the DOC (103) is acquired by a temperature sensor (101) arranged upstream of the DOC (103);

a second acquiring subunit configured to acquire a fuel demand amount of the first DOC sub-block (501) based on the temperature upstream of the first DOC sub-block (501) and the initial temperature downstream of the first DOC sub-block (501);

a third acquiring subunit configured to acquire an actual temperature downstream of the first DOC sub-block (501) based on the temperature upstream of the first DOC sub-block (501) and the fuel demand amount of the first DOC sub-block (501);

a third setting subunit configured to set the actual temperature downstream of the first DOC sub-block (501) as a temperature upstream of the second DOC sub-block (502);

a fourth acquiring subunit configured to acquire a fuel demand amount of the second DOC sub-block (502) based on the temperature upstream of the second DOC sub-block (502) and the initial temperature downstream of the second DOC sub-block (502);

a fifth acquiring subunit configured to acquire an actual temperature downstream of the second DOC sub-block (502) based on the temperature upstream of the second DOC sub-block (502) and the fuel demand amount of the second DOC sub-block (502); and

a sixth acquiring subunit configured to acquire the feedforward fuel amount based on the fuel demand amount of the first DOC sub-block (501) and the fuel demand amount of the second DOC sub-block (502).

6. The device according to claim 5, further comprising:
a third acquiring unit configured to acquire the feedback fuel amount based on a difference between the actual temperature downstream of the second DOC sub-block (502) and the current temperature upstream of the DPF (105) by utilizing a proportional-integral-differential PID algorithm.

7. The device according to claim 5, wherein the sixth acquiring subunit is configured to acquire the feedforward fuel amount based on the fuel demand amount of the first DOC sub-block (501), a first fuel conversion rate corresponding to the fuel demand amount of the first DOC sub-block (501), the fuel demand amount of the second DOC sub-block (502) and a second fuel conversion rate corresponding to the fuel demand amount of the second DOC sub-block (502).

8. The device according to claim 5, wherein the first acquiring unit is configured to acquire the feedforward fuel amount periodically by utilizing the physical model, wherein a preset regeneration temperature corresponding to a previous period is increased by a fixed temperature or a non-fixed temperature to obtain a preset regeneration temperature corresponding to a subsequent period, and the preset regeneration temperature ranges from the current temperature upstream of the DPF (105) to a target regeneration temperature.

9. A vehicle, comprising the device for controlling a temperature upstream of a DPF (105) according to any one of claims 5 to 8.

**Patentansprüche**

1. Verfahren zur Regelung einer Temperatur stromaufwärts eines DPF (105), umfassend:

Erfassen einer Vorwärtskopplungs-Kraftstoffmenge unter Verwendung eines physikalischen Modells auf der Grundlage einer voreingestellten Regenerationstemperatur, einer aktuellen Temperatur stromaufwärts des Dieselpartikelfilters DPF (105) und einer aktuellen Temperatur stromaufwärts eines Dieseloxidationskatalysators DOC (103), wobei das physikalische Modell durch Simulieren eines Prozesses konstruiert wird, in dem der DOC (103) die Temperatur stromaufwärts des DPF (105) auf die voreingestellte Regenerationstemperatur erhöht;

Erfassen einer Gesamtkraftstoffmenge auf der Grundlage der Vorwärtskopplungs-Kraftstoffmenge und einer Rückkopplungs-Kraftstoffmenge;

Übertragen der Gesamtkraftstoffmenge an eine Kohlenwasserstoff-Ausstoßvorrichtung, wobei die Kohlenwasserstoff-Ausstoßvorrichtung Kraftstoff auf der Grundlage der Gesamtkraftstoffmenge ausstößt, um die Temperatur stromaufwärts des DPF (105) auf die voreingestellte Regenerationstemperatur zu erhöhen; und wobei das Konstruieren des physikalischen Modells durch Simulieren des Prozesses, bei dem der DOC (103) die Temperatur stromaufwärts des DPF (105) auf die voreingestellte Regenerationstemperatur erhöht, umfasst:

Aufteilen des DOC (103) in mindestens zwei DOC-Unterblöcke, wobei die mindestens zwei DOC-Unterblöcke einen ersten DOC-Unterblock (501) und einen zweiten DOC-Unterblock (502) umfassen und das Abgas nacheinander durch den ersten DOC-Unterblock (501) und den zweiten DOC-Unterblock (502) strömt;

Festlegen der aktuellen Temperatur stromaufwärts des DPF (105) als Anfangstemperatur stromabwärts des zweiten DOC-Unterblocks (502), wobei die aktuelle Temperatur stromaufwärts des DPF (105) durch einen stromaufwärts des DPF (105) angeordneten Temperatursensor (104) erfasst wird;

Erfassen einer Anfangstemperatur stromabwärts des ersten DOC-Unterblocks (501) auf der Grundlage der Anfangstemperatur stromabwärts des zweiten DOC-Unterblocks (502);

Festlegen der aktuellen Temperatur stromaufwärts des DOC (103) als Temperatur stromaufwärts des ersten DOC-Unterblocks (501), wobei die aktuelle Temperatur stromaufwärts des DOC (103) durch einen stromaufwärts des DOC (103) angeordneten Temperatursensor (101) erfasst wird;

Erfassen einer Kraftstoffbedarfsmenge des ersten DOC-Unterblocks (501) auf der Grundlage der Temperatur stromaufwärts des ersten DOC-Unterblocks (501) und der Anfangstemperatur stromabwärts des ersten DOC-Unterblocks (501);

Erfassen einer Ist-Temperatur stromabwärts des ersten DOC-Unterblocks (501) auf der Grundlage der Temperatur stromaufwärts des ersten DOC-Unterblocks (501) und der Kraftstoffbedarfsmenge des ersten DOC-Unterblocks (501);

Festlegen der tatsächlichen Temperatur stromabwärts des ersten DOC-Unterblocks (501) als Temperatur stromaufwärts des zweiten DOC-Unterblocks (502);

Erfassen einer Kraftstoffbedarfsmenge des zweiten DOC-Unterblocks (502) auf der Grundlage der Temperatur stromaufwärts des zweiten DOC-Unterblocks (502) und der Anfangstemperatur stromabwärts des zweiten DOC-Unterblocks (502);

Erfassen einer tatsächlichen Temperatur stromabwärts des zweiten DOC-Unterblocks (502) auf der Grundlage der Temperatur stromaufwärts des zweiten DOC-Unterblocks (502) und der Kraftstoffbedarfsmenge des zweiten DOC-Unterblocks (502); und

Erfassen der Vorwärtskopplungs-Kraftstoffmenge auf der Grundlage der Kraftstoffbedarfsmenge des ersten DOC-Unterblocks (501) und der Kraftstoffbedarfsmenge des zweiten DOC-Unterblocks (502).

2. Verfahren nach Anspruch 1, wobei das Verfahren vor dem Ermitteln einer Gesamtkraftstoffmenge auf der Grundlage der Vorwärtskopplungs-Kraftstoffmenge und einer Rückkopplungs-Kraftstoffmenge ferner umfasst:

Erfassen der Rückkopplungs-Kraftstoffmenge auf der Grundlage einer Differenz zwischen der tatsächlichen Temperatur stromabwärts des zweiten DOC-Unterblocks (502) und der aktuellen Temperatur stromaufwärts des DPF (105) unter Verwendung eines Proportional-Integral-Differential-PID-Algorithmus.

3. Verfahren nach Anspruch 1, wobei das Ermitteln der Vorwärtskopplungs-Kraftstoffmenge auf der Grundlage der Kraftstoffbedarfsmenge des ersten DOC-Unterblocks (501) und der Kraftstoffbedarfsmenge des zweiten DOC-Unterblocks (502) umfasst:

Erfassen der Vorwärtskopplungs-Kraftstoffmenge auf der Grundlage der Kraftstoffbedarfsmenge des ersten DOC-Unterblocks (501), einer ersten Kraftstoffumwandlungsrate, die der Kraftstoffbedarfsmenge des ersten DOC-Unterblocks (501) entspricht, der Kraftstoffbedarfsmenge des zweiten DOC-Unterblocks (502) und einer zweiten Kraftstoffumwandlungsrate, die der Kraftstoffbedarfsmenge des zweiten DOC-Unterblocks (502) entspricht.

4. Verfahren nach Anspruch 1, wobei das Ermitteln einer Vorwärtskopplungs-Kraftstoffmenge unter Verwendung eines physikalischen Modells umfasst:

periodisches Erfassen der Vorwärtskopplungs-Kraftstoffmenge unter Verwendung des physikalischen Modells, wobei eine voreingestellte Regenerationstemperatur, die einer vorherigen Periode entspricht, um eine feste Temperatur oder eine nicht feste Temperatur erhöht wird, um eine voreingestellte Regenerationstemperatur zu erhalten, die einer nachfolgenden Periode entspricht, und die voreingestellte Regenerationstemperatur im Bereich von der aktuellen Temperatur stromaufwärts des DPF (105) bis zu einer Zielregenerationstemperatur liegt.

5. Vorrichtung zum Steuern einer Temperatur stromaufwärts eines DPF (105), umfassend:

eine erste Erfassungseinheit, die so konfiguriert ist, dass sie unter Verwendung eines physikalischen Modells eine Vorwärtskopplungs-Kraftstoffmenge auf der Grundlage einer voreingestellten Regenerationstemperatur, einer aktuellen Temperatur stromaufwärts eines Dieselpartikelfilters DPF (105) und einer aktuellen Temperatur stromaufwärts eines Dieseloxidationskatalysators DOC (103) zu erfassen, wobei das physikalische Modell durch Simulation eines Prozesses konstruiert wird, bei dem der DOC (103) die Temperatur vor dem DPF (105) auf die voreingestellte Regenerationstemperatur erhöht;

eine zweite Erfassungseinheit, die so konfiguriert ist, dass sie eine Gesamtkraftstoffmenge auf der Grundlage der Vorwärtskopplungs-Kraftstoffmenge und einer Rückkopplungs-Kraftstoffmenge erfasst;

EP 3 896 266 B1

eine Übertragungseinheit, die so konfiguriert ist, dass sie die Gesamtkraftstoffmenge an eine Kohlenwasserstoff-Ausstoßvorrichtung überträgt, wobei die Kohlenwasserstoff-Ausstoßvorrichtung Kraftstoff auf der Grundlage der Gesamtkraftstoffmenge ausstößt, um die Temperatur stromaufwärts des DPF (105) auf die voreingestellte Regenerationstemperatur zu erhöhen; und wobei die erste Erfassungseinheit umfasst:

eine Unterteilungsuntereinheit, die so konfiguriert ist, dass sie den DOC (103) in mindestens zwei DOC-Unterblöcke unterteilt, wobei die mindestens zwei DOC-Unterblöcke einen ersten DOC-Unterblock (501) und einen zweiten DOC-Unterblock (502) umfassen und das Abgas nacheinander durch den ersten DOC-Unterblock (501) und den zweiten DOC-Unterblock (502) strömt;

eine erste Einstelluntereinheit, die so konfiguriert ist, dass sie die aktuelle Temperatur stromaufwärts des DPF (105) als Anfangstemperatur stromabwärts des zweiten DOC-Unterblocks (502) einstellt, wobei die aktuelle Temperatur stromaufwärts des DPF (105) durch einen stromaufwärts des DPF (105) angeordneten Temperatursensor (104) erfasst wird;

eine erste Erfassungsuntereinheit, die so konfiguriert ist, dass sie eine Anfangstemperatur stromabwärts des ersten DOC-Unterblocks (501) auf der Grundlage der Anfangstemperatur stromabwärts des zweiten DOC-Unterblocks (502) erfasst;

eine zweite Einstelluntereinheit, die so konfiguriert ist, dass sie die aktuelle Temperatur stromaufwärts des DOC (103) als Temperatur stromaufwärts des ersten DOC-Unterblocks (501) einstellt, wobei die aktuelle Temperatur stromaufwärts des DOC (103) durch einen stromaufwärts des DOC (103) angeordneten Temperatursensor (101) erfasst wird;

eine zweite Erfassungsuntereinheit, die so konfiguriert ist, dass sie einen Kraftstoffbedarf des ersten DOC-Unterblocks (501) auf der Grundlage der Temperatur stromaufwärts des ersten DOC-Unterblocks (501) und der Anfangstemperatur stromabwärts des ersten DOC-Unterblocks (501) erfasst;

eine dritte Erfassungsuntereinheit, die so konfiguriert ist, dass sie eine tatsächliche Temperatur stromabwärts des ersten DOC-Unterblocks (501) auf der Grundlage der Temperatur stromaufwärts des ersten DOC-Unterblocks (501) und der Kraftstoffbedarfsmenge des ersten DOC-Unterblocks (501) erfasst;

eine dritte Einstelluntereinheit, die so konfiguriert ist, dass sie die tatsächliche Temperatur stromabwärts des ersten DOC-Unterblocks (501) als Temperatur stromaufwärts des zweiten DOC-Unterblocks (502) einstellt;

eine vierte Erfassungsuntereinheit, die so konfiguriert ist, dass sie eine Kraftstoffbedarfsmenge des zweiten DOC-Unterblocks (502) auf der Grundlage der Temperatur stromaufwärts des zweiten DOC-Unterblocks (502) und der Anfangstemperatur stromabwärts des zweiten DOC-Unterblocks (502) erfasst;

eine fünfte Erfassungsuntereinheit, die so konfiguriert ist, dass sie eine tatsächliche Temperatur stromabwärts des zweiten DOC-Unterblocks (502) auf der Grundlage der Temperatur stromaufwärts des zweiten DOC-Unterblocks (502) und der Kraftstoffbedarfsmenge des zweiten DOC-Unterblocks (502) erfasst; und

eine sechste Erfassungsuntereinheit, die so konfiguriert ist, dass sie die Vorwärtskopplungs-Kraftstoffmenge auf der Grundlage der Kraftstoffbedarfsmenge des ersten DOC-Unterblocks (501) und der Kraftstoffbedarfsmenge des zweiten DOC-Unterblocks (502) erfasst.

6. Vorrichtung nach Anspruch 5, ferner umfassend:
eine dritte Erfassungseinheit, die so konfiguriert ist, dass sie die Rückkopplungs-Kraftstoffmenge auf der Grundlage einer Differenz zwischen der tatsächlichen Temperatur stromabwärts des zweiten DOC-Unterblocks (502) und der aktuellen Temperatur stromaufwärts des DPF (105) unter Verwendung eines Proportional-Integral-Differential-PID-Algorithmus erfasst.

7. Vorrichtung nach Anspruch 5, wobei die sechste Erfassungseinheit so konfiguriert ist, dass sie die Vorwärtskopplungs-Kraftstoffmenge auf der Grundlage der Kraftstoffbedarfsmenge des ersten DOC-Unterblocks (501), einer ersten Kraftstoffumwandlungsrate, die der Kraftstoffbedarfsmenge des ersten DOC-Unterblocks (501) entspricht, der Kraftstoffbedarf des zweiten DOC-Unterblocks (502) und einer zweiten Kraftstoffumwandlungsrate, die dem Kraftstoffbedarf des zweiten DOC-Unterblocks (502) entspricht, zu erfassen.

8. Vorrichtung nach Anspruch 5, wobei die erste Erfassungseinheit so konfiguriert ist, dass sie die Vorwärtskopplungs-Kraftstoffmenge periodisch unter Verwendung des physikalischen Modells erfasst, wobei eine voreingestellte Regenerationstemperatur, die einer vorherigen Periode entspricht, um eine feste Temperatur oder eine nicht feste Temperatur erhöht wird, um eine voreingestellte Regenerationstemperatur zu erhalten, die einer nachfolgenden Periode entspricht, und wobei die voreingestellte Regenerationstemperatur von der aktuellen Temperatur stromaufwärts des DPF (105) bis zu einer Zielregenerationstemperatur reicht.

9. Fahrzeug, das die Vorrichtung zum Steuern einer Temperatur stromaufwärts eines DPF (105) gemäß einem der Ansprüche 5 bis 8 umfasst.

**Revendications**

1. Procédé de régulation d'une température en amont d'un FPD (105), comprenant :

la détection, à l'aide d'un modèle physique, d'une quantité de carburant en boucle directe sur la base d'une température de régénération prédéfinie, d'une température réelle en amont du filtre à particules diesel FPD (105) et d'une température réelle en amont d'un catalyseur d'oxydation diesel COD (103), le modèle physique étant construit en simulant un processus dans lequel le COD (103) augmente la température en amont du FPD (105) jusqu'à la température de régénération prédéfinie ;
la détection d'une quantité totale de carburant sur la base de la quantité de carburant en boucle directe et d'une quantité de carburant en boucle inverse ;
la transmission de la quantité totale de carburant à un dispositif d'émission d'hydrocarbures, le dispositif d'émission d'hydrocarbures émettant du carburant sur la base de la quantité totale de carburant afin d'augmenter la température en amont du FPD (105) jusqu'à la température de régénération prédéfinie ; et sachant que la construction du modèle physique par simulation du processus dans lequel le COD (103) augmente la température en amont du FPD (105) jusqu'à la température de régénération prédéfinie comprend :

la subdivision du COD (103) en au moins deux sous-blocs COD, les au moins deux sous-blocs COD comprenant un premier sous-bloc COD (501) et un deuxième sous-bloc COD (502), et les gaz d'échappement s'écoulant successivement à travers le premier sous-bloc COD (501) et le deuxième sous-bloc COD (502) ;
la définition de la température réelle en amont du FPD (105) comme température initiale en aval du deuxième sous-bloc COD (502), la température réelle en amont du FPD (105) étant détectée par un capteur de température (104) disposé en amont du FPD (105) ;
la détection d'une température initiale en aval du premier sous-bloc COD (501) sur la base de la température initiale en aval du deuxième sous-bloc COD (502) ;
la définition de la température réelle en amont du COD (103) comme température en amont du premier sous-bloc COD (501), la température réelle en amont du COD (103) étant détectée par un capteur de température (101) disposé en amont du COD (103) ;
la détection d'une quantité de carburant requise du premier sous-bloc COD (501) sur la base de la température en amont du premier sous-bloc COD (501) et de la température initiale en aval du premier sous-bloc COD (501) ;
la détection d'une température réelle en aval du premier sous-bloc COD (501) sur la base de la température en amont du premier sous-bloc COD (501) et de la quantité de carburant requise du premier sous-bloc COD (501) ;
la définition de la température réelle en aval du premier sous-bloc COD (501) comme température en amont du deuxième sous-bloc COD (502) ;
la détection d'une quantité de carburant requise du deuxième sous-bloc COD (502) sur la base de la température en amont du deuxième sous-bloc COD (502) et de la température initiale en aval du deuxième sous-bloc COD (502) ;
la détection d'une température réelle en aval du deuxième sous-bloc COD (502) sur la base de la température en amont du deuxième sous-bloc COD (502) et de la quantité de carburant requise du deuxième sous-bloc COD (502) ; et
la détection de la quantité de carburant en boucle directe sur la base de la quantité de carburant requise du premier sous-bloc COD (501) et de la quantité de carburant requise du deuxième sous-bloc COD (502).

2. Le procédé selon la revendication 1, sachant que, avant la détection d'une quantité totale de carburant sur la base de la quantité de carburant en boucle directe et d'une quantité de carburant en boucle inverse, le procédé comprend en outre :
la détection de la quantité de carburant en boucle inverse sur la base d'une différence entre la température réelle en aval du deuxième sous-bloc COD (502) et la température réelle en amont du FPD (105) à l'aide d'un algorithme PID (proportionnel-intégral-différentiel).

3. Le procédé selon la revendication 1, sachant que la détection de la quantité de carburant en boucle directe, sur la base de la quantité de carburant requise du premier sous-bloc COD (501) et de la quantité de carburant requise du deuxième sous-bloc COD (502), comprend :

la détection de la quantité de carburant en boucle directe sur la base de la quantité de carburant requise du premier sous-bloc COD (501), d'un premier taux de conversion de carburant correspondant à la quantité de carburant requise du premier sous-bloc COD (501), de la quantité de carburant requise du deuxième sous-bloc COD (502) et d'un deuxième taux de conversion de carburant correspondant à la quantité de carburant requise du deuxième sous-bloc COD (502).

4. Le procédé selon la revendication 1, sachant que la détection d'une quantité de carburant en boucle directe à l'aide d'un modèle physique comprend :

la détection périodique de la quantité de carburant en boucle directe à l'aide du modèle physique, sachant qu'une température de régénération prédéfinie correspondant à une période précédente est augmentée d'une température fixe ou d'une température non fixe afin d'obtenir une température de régénération prédéfinie correspondant à une période suivante, et que la température de régénération prédéfinie s'étend de la température réelle en amont du FPD (105) à une température de régénération cible.

5. Dispositif de régulation d'une température en amont d'un FPD (105), comprenant :

une première unité de détection conçue pour détecter, à l'aide d'un modèle physique, une quantité de carburant en boucle directe sur la base d'une température de régénération prédéfinie, d'une température réelle en amont d'un filtre à particules diesel FPD (105) et d'une température réelle en amont d'un catalyseur d'oxydation diesel COD (103), le modèle physique étant construit en simulant un processus dans lequel le COD (103) augmente la température en amont du FPD (105) jusqu'à la température de régénération prédéfinie ;
une deuxième unité de détection conçue pour détecter une quantité totale de carburant sur la base de la quantité de carburant en boucle directe et d'une quantité de carburant en boucle inverse ;
une unité de transmission conçue pour transférer la quantité totale de carburant à un dispositif d'émission d'hydrocarbures, le dispositif d'émission d'hydrocarbures émettant du carburant sur la base de la quantité totale de carburant afin d'augmenter la température en amont du FPD (105) jusqu'à la température de régénération prédéfinie ; et sachant que la première unité de détection comprend :

une sous-unité de subdivision conçue pour subdiviser le COD (103) en au moins deux sous-blocs COD, lesdits au moins deux sous-blocs COD comprenant un premier sous-bloc COD (501) et un deuxième sous-bloc COD (502), et les gaz d'échappement s'écoulant successivement à travers le premier sous-bloc COD (501) et le deuxième sous-bloc COD (502) ;
une première sous-unité de définition conçue pour établir la température réelle en amont du FPD (105) comme température initiale en aval du deuxième sous-bloc COD (502), la température réelle en amont du FPD (105) étant détectée par un capteur de température (104) disposé en amont du FPD (105) ;
une première sous-unité de détection conçue pour détecter une température initiale en aval du premier sous-bloc COD (501) sur la base de la température initiale en aval du deuxième sous-bloc COD (502) ;
une deuxième sous-unité de définition conçue pour établir la température réelle en amont du COD (103) comme température en amont du premier sous-bloc COD (501), la température réelle en amont du COD (103) étant détectée par un capteur de température (101) disposé en amont du COD (103) ;
une deuxième sous-unité de détection conçue pour détecter une quantité de carburant requise du premier sous-bloc COD (501) sur la base de la température en amont du premier sous-bloc COD (501) et de la température initiale en aval du premier sous-bloc COD (501) ;
une troisième sous-unité de détection conçue pour détecter une température réelle en aval du premier sous-bloc COD (501) sur la base de la température en amont du premier sous-bloc COD (501) et de la quantité de carburant requise du premier sous-bloc COD (501) ;
une troisième sous-unité de définition conçue pour établir la température réelle en aval du premier sous-bloc COD (501) comme température en amont du deuxième sous-bloc COD (502) ;
une quatrième sous-unité de détection conçue pour détecter une quantité de carburant requise du deuxième sous-bloc COD (502) sur la base de la température en amont du deuxième sous-bloc COD (502) et de la température initiale en aval du deuxième sous-bloc COD (502) ;
une cinquième sous-unité de détection conçue pour détecter une température réelle en aval du deuxième sous-bloc COD (502) sur la base de la température en amont du deuxième sous-bloc COD (502) et de la quantité de carburant requise du deuxième sous-bloc COD (502) ; et
une sixième sous-unité de détection conçue pour détecter la quantité de carburant en boucle directe sur la base de la quantité de carburant requise du premier sous-bloc COD (501) et de la quantité de carburant requise du deuxième sous-bloc COD (502).

**6.** Le dispositif selon la revendication 5, comprenant en outre :
une troisième unité de détection conçue pour détecter la quantité de carburant en boucle inverse sur la base d'une différence entre la température réelle en aval du deuxième sous-bloc COD (502) et la température réelle en amont du FPD (105) à l'aide d'un algorithme PID (proportionnel-intégral-différentiel).

**7.** Le dispositif selon la revendication 5, sachant que la sixième sous-unité de détection est conçue pour détecter la quantité de carburant en boucle directe sur la base de la quantité de carburant requise du premier sous-bloc COD (501), d'un premier taux de conversion de carburant correspondant à la quantité de carburant requise du premier sous-bloc COD (501), de la quantité de carburant requise du deuxième sous-bloc COD (502) et d'un deuxième taux de conversion de carburant correspondant à la quantité de carburant requise du deuxième sous-bloc COD (502).

**8.** Le dispositif selon la revendication 5, sachant que la première unité de détection est conçue pour détecter périodiquement la quantité de carburant en boucle directe à l'aide du modèle physique, sachant qu'une température de régénération prédéfinie correspondant à une période précédente est augmentée d'une température fixe ou d'une température non fixe afin d'obtenir une température de régénération prédéfinie correspondant à une période suivante, et que la température de régénération prédéfinie s'étend de la température réelle en amont du FPD (105) à une température de régénération cible.

**9.** Véhicule comprenant le dispositif de régulation d'une température en amont d'un FPD (105) selon l'une quelconque des revendications 5 à 8.

**Figure 1**

| |
| --- |
| Acquire a basic feedforward fuel amount based on a mapping table between a current mass flow rate of exhaust gas and a temperature upstream of a DOC; acquire a feedforward fuel increment based on a preset regeneration temperature, the temperature upstream of the DOC, the mass flow rate of the exhaust gas, and exhaust heat capacity; and acquire a feedforward fuel amount by adding the basic feedforward fuel amount and the feedforward fuel increment |

S201

| |
| --- |
| Acquire, by utilizing a proportional-integral-differential (PID) algorithm, a feedback fuel amount based on the preset regeneration temperature and a temperature measured by a temperature sensor 104 arranged upstream of a DPF |

S202

| |
| --- |
| Acquire a total fuel amount required to be ejected from a HC ejection device 102 by adding the feedforward fuel amount and the feedback fuel amount, so that the DOC 103 controls the HC ejection device 102 to eject fuel based on the total fuel amount, to increase the temperature of the exhaust gas by burning the fuel, so that the temperature upstream of the DPF is increased to the preset regeneration temperature |

S203

**Figure 2**

Acquire, by utilizing a physical model, a feedforward fuel amount based on a preset regeneration temperature, a current temperature upstream of a diesel particulate filter DPF and a current temperature upstream of a diesel oxidation catalyst DOC, where the physical model is constructed by simulating a process in which the DOC increases a temperature upstream of the DPF to the preset regeneration temperature — S301

Acquire a total fuel amount based on the feedforward fuel amount and a feedback fuel amount — S302

Transmit the total fuel amount to a hydrocarbon ejection device, so that the hydrocarbon ejection device ejects fuel based on the total fuel amount, so as to increase a temperature upstream of the DPF to the preset regeneration temperature — S303

**Figure 3**

Construct a physical model — S401

Acquire, by utilizing the physical model, a feedforward fuel amount based on a preset regeneration temperature, a current temperature upstream of a diesel particulate filter DPF and a current temperature upstream of a diesel oxidation catalyst DOC — S402

Acquire a feedback fuel amount based on a difference between a first temperature and the current temperature upstream of the DPF by utilizing a proportional-integral-differential PID algorithm — S403

Acquire a total fuel amount based on the feedforward fuel amount and a feedback fuel amount — S404

Transmit the total fuel amount to a hydrocarbon ejection device, so that the hydrocarbon ejection device ejects fuel based on the total fuel amount, so as to increase the temperature upstream of the DPF to the preset regeneration temperature — S405

**Figure 4**

| | |
|---|---|
| Divide a DOC into N DOC sub-blocks, where N is a positive integer and N is greater than or equal to 2 | S4011 |

| | |
|---|---|
| Set a current temperature upstream of a DPF as an initial temperature downstream of an Nth DOC sub-block | S4012 |

| | |
|---|---|
| Acquire initial temperatures downstream of the N DOC sub-blocks in sequence | S4013 |

| | |
|---|---|
| Set a current temperature upstream of the DOC as a temperature upstream of the first DOC sub-block, where the temperature upstream of the DOC is a temperature of exhaust gas flowing into the DOC | S4014 |

| | |
|---|---|
| Acquire fuel demand amounts of these DOC sub-blocks and actual temperatures downstream of these DOC sub-blocks in sequence | S4015 |

| | |
|---|---|
| Acquire a feedforward fuel amount based on the fuel demand amounts of all the DOC sub-blocks | S4016 |

**Figure 5**

**Figure 6**

Acquire an initial temperature downstream of an (N-1)th DOC sub-block based on the initial temperature downstream of the Nth DOC sub-block

S40131

Acquire an initial temperature downstream of an (N-2)th DOC sub-block based on the initial temperature downstream of the (N-1)th DOC sub-block

S40132

Acquire an initial temperature downstream of an (N-3)th DOC sub-block based on the initial temperature downstream of the (N-2)th DOC sub-block

S40133

......

Acquire an initial temperature downstream of a second DOC sub-block based on an initial temperature downstream of a third DOC sub-block

S40134

Acquire an initial temperature downstream of a first DOC sub-block based on an initial temperature downstream of the second DOC sub-block

S40135

**Figure 7**

| | |
|---|---|
| Acquire a fuel demand amount of a first DOC sub-block based on a temperature upstream of a first DOC sub-block and an initial temperature downstream of the first DOC sub-block | S4015a |
| Acquire an actual temperature downstream of the first DOC sub-block based on the temperature upstream of the first DOC sub-block and the fuel demand amount of the first DOC sub-block | S4015b |
| Set the actual temperature downstream of the first DOC sub-block as a temperature upstream of the second DOC sub-block | S4015c |
| Acquire a fuel demand amount of the second DOC sub-block based on the temperature upstream of the second DOC sub-block and the initial temperature downstream of the second DOC sub-block | S4015d |
| Acquire an actual temperature downstream of the second DOC sub-block based on the temperature upstream of the second DOC sub-block and the fuel demand amount of the second DOC sub-block | S4015e |
| Set the actual temperature downstream of the second DOC sub-block as a temperature upstream of the third DOC sub-block | S4015f |
| Acquire a fuel demand amount of the third DOC sub-block based on the temperature upstream of the third DOC sub-block and the initial temperature downstream of the third DOC sub-block | S4015g |
| Acquire an actual temperature downstream of the third DOC sub-block based on the temperature upstream of the third DOC sub-block and the fuel demand amount of the third DOC sub-block | S4015h |
| Set the actual temperature downstream of the third DOC sub-block as a temperature upstream of the fourth DOC sub-block | S4015i |

......

| | |
|---|---|
| Acquire a fuel demand amount of the (N-1)th DOC sub-block based on the temperature upstream of the (N-1)th DOC sub-block and the initial temperature downstream of the (N-1)th DOC sub-block | S4015j |
| Acquire an actual temperature downstream of the (N-1)th DOC sub-block based on the temperature upstream of the (N-1)th DOC sub-block and the fuel demand amount of the (N-1)th DOC sub-block | S4015k |
| Set the actual temperature downstream of the (N-1)th DOC sub-block as a temperature upstream of the Nth DOC sub-block | S4015l |
| Acquire a fuel demand amount of the Nth DOC sub-block based on the temperature upstream of the Nth DOC sub-block and the initial temperature downstream of the Nth DOC sub-block | S4015m |
| Acquire an actual temperature downstream of the Nth DOC sub-block based on the temperature upstream of the Nth DOC sub-block and the fuel demand amount of the Nth DOC sub-block | S4015n |

**Figure 8**

Divide a DOC into two DOC sub-blocks, that is, a first DOC sub-block and a second DOC sub-block — S401a

Set a current temperature upstream of the DPF as an initial temperature downstream of the second DOC sub-block — S401b

Acquire an initial temperature downstream of the first DOC sub-block based on the initial temperature downstream of the second DOC sub-block — S401c

Set a current temperature upstream of the DOC as a temperature upstream of the first DOC sub-block — S401d

Acquire a fuel demand amount of the first DOC sub-block based on the temperature upstream of the first DOC sub-block and the initial temperature downstream of the first DOC sub-block — S401e

Acquire an actual temperature downstream of the first DOC sub-block based on the temperature upstream of the first DOC sub-block and the fuel demand amount of the first DOC sub-block — S401f

Set the actual temperature downstream of the first DOC sub-block as a temperature upstream of the second DOC sub-block — S401g

Acquire a fuel demand amount of the second DOC sub-block based on the temperature upstream of the second DOC sub-block and the initial temperature downstream of the second DOC sub-block — S401h

Acquire an actual temperature downstream of the second DOC sub-block based on the temperature upstream of the second DOC sub-block and the fuel demand amount of the second DOC sub-block — S401i

Acquire a feedforward fuel amount based on the fuel demand amount of the first DOC sub-block and the fuel demand amount of the second DOC sub-block — S401j

**Figure 9**

Acquire a preset regeneration temperature based on a current temperature upstream of a DPF — S901

Acquire, by utilizing a physical model, a feedforward fuel amount based on the preset regeneration temperature, the current temperature upstream of the diesel particulate filter DPF and a current temperature upstream of a diesel oxidation catalyst DOC, where the physical model is constructed by simulating a process in which the DOC increases the temperature upstream of the DPF to the preset regeneration temperature — S902

Acquire a total fuel amount based on the feedforward fuel amount and a feedback fuel amount — S903

Transmit the total fuel amount to a hydrocarbon ejection device, so that the hydrocarbon ejection device ejects fuel based on the total fuel amount, so as to increase the temperature upstream of the DPF to the preset regeneration temperature — S904

Acquire an updated temperature upstream of the DPF — S905

Determine whether the updated temperature upstream of the DPF reaches a target regeneration temperature — S906

Yes

No

Acquire an updated preset regeneration temperature based on a sum of the preset regeneration temperature and a first increment — S907

Acquire the preset regeneration temperature and the current temperature upstream of the DPF based on the updated preset regeneration temperature and the updated temperature upstream of the DPF respectively — S908

End the process of controlling the temperature upstream of the DPF — S909

**Figure 10**

／ 1001        ／ 1002        ／ 1003

| First acquiring unit | Second acquiring unit | Transmitting unit |
| --- | --- | --- |

**Figure 11**

Vehicle

／ 1101

Device for controlling a temperature
upstream of a DPF

**Figure 12**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2013108511 A1
- EP 1515017 A2
- WO 2007138454 A1